(19) Europäisches Patentamt
European Patent Office
Office européen des brevets

(11) EP 3 652 245 B1

(12) **EUROPÄISCHE PATENTSCHRIFT**

(45) Veröffentlichungstag und Bekanntmachung des Hinweises auf die Patenterteilung:
**24.04.2024 Patentblatt 2024/17**

(21) Anmeldenummer: **18740539.4**

(22) Anmeldetag: **06.07.2018**

(51) Internationale Patentklassifikation (IPC):
***C08K 5/53*** *(2006.01)* ***C08K 9/02*** *(2006.01)*
***C08L 77/00*** *(2006.01)* ***C08L 67/02*** *(2006.01)*
***B41M 5/26*** *(2006.01)* ***B29C 65/16*** *(2006.01)*

(52) Gemeinsame Patentklassifikation (CPC):
(C-Sets verfügbar)
**C08K 5/53; B41M 5/267; C08K 9/02; C08L 77/06;**
B29C 65/1616; B29C 65/1635; B29C 66/739;
B29K 2105/0026; C08K 5/0066; C08K 5/34928;
C08K 5/5313; C08K 5/5317; C08K 7/14;
C08K 2003/3036 (Forts.)

(86) Internationale Anmeldenummer:
**PCT/EP2018/068323**

(87) Internationale Veröffentlichungsnummer:
**WO 2019/011792 (17.01.2019 Gazette 2019/03)**

(54) **ADDITIVMISCHUNGEN FÜR KUNSTSTOFFE, LASERMARKIERBARE POLYMERZUSAMMENSETZUNGEN ENTHALTEND DIESE UND DEREN VERWENDUNG**

ADDITIVE MIXTURES FOR PLASTICS, LASER-MARKABLE POLYMER COMPOSITIONS CONTAINING SAME, AND USE THEREOF

MÉLANGES D'ADDITIFS POUR MATIÈRES PLASTIQUES, COMPOSITIONS POLYMÈRES MARQUABLES AU LASER LES CONTENANT ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2017 DE 102017212100**

(43) Veröffentlichungstag der Anmeldung:
**20.05.2020 Patentblatt 2020/21**

(73) Patentinhaber: **Clariant International Ltd**
**4132 Muttenz (CH)**

(72) Erfinder:
- **BAUER, Harald**
  **50170 Kerpen (DE)**
- **HÖROLD, Sebastian**
  **86420 Diedorf (DE)**
- **SICKEN, Martin**
  **51149 Köln (DE)**

(74) Vertreter: **Clariant Produkte (Deutschland) GmbH et al**
**Patent Management**
**Industriepark Höchst, G 860**
**65926 Frankfurt am Main (DE)**

(56) Entgegenhaltungen:
**EP-A1- 1 544 206** **DE-A1-102004 050 555**
**DE-A1-102004 051 246** **DE-A1-102014 018 586**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 652 245 B1

(52) Gemeinsame Patentklassifikation (CPC): (Forts.)

C-Sets
**C08K 5/53, C08L 67/02;**
**C08K 5/53, C08L 77/06;**
**C08K 7/14, C08L 67/02;**
**C08K 7/14, C08L 77/06**

## Beschreibung

Die vorliegende Erfindung betrifft neue Additivmischungen und flammgeschützte und lasermarkierbare oder laserschweißbare Polymerzusammensetzungen enthaltend diese sowie die Verwendung dieser Zusammensetzungen.

Brennbare Kunststoffe müssen in der Regel mit Flammschutzmitteln ausgerüstet werden, um die von den Kunststoffverarbeitern und teilweise vom Gesetzgeber geforderten hohen Flammschutzanforderungen erreichen zu können. Bevorzugt - auch aus ökologischen Gründen - werden nicht-halogenierte Flammschutzmittelsysteme eingesetzt, die nur geringe oder keine Rauchgase bilden

Unter diesen Flammschutzmitteln haben sich die Salze von Phosphinsäuren (Phosphinate) als besonders für thermoplastische Polymere wirksam erwiesen (DE 2 252 258 A und DE 2 447 727 A).

Darüber hinaus sind synergistische Kombinationen von Phosphinaten mit bestimmten stickstoffhaltigen Verbindungen bekannt, die in einer ganzen Reihe von Polymeren als Flammschutzmittel effektiver wirken, als die Phosphinate allein (WO-2002/28953 A1 sowie DE 197 34 437 A1 und DE 197 37 727 A1).

Aus der US 7,420,007 B2 ist bekannt, dass Dialkylphosphinate enthaltend eine geringe Menge an ausgewählten Telomeren als Flammschutzmittel für Polymere geeignet sind, wobei das Polymere bei der Einarbeitung des Flammschutzmittels in die Polymermatrix nur einem recht geringen Abbau unterliegt.

Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel, vor allem bei höheren Dosierungen, die Verarbeitungsstabilität von Kunststoffen beeinträchtigen. Es kann zu verstärktem Polymerabbau, zu Vernetzungs-reaktionen, zu Ausgasungen oder Verfärbungen kommen.

Auch der Zusatz von Additiven, die dem Kunststoff-Formteil eine bestimmte Eigenschaft verleihen, ist hinlänglich bekannt. So sind laseraktivierbare Additive bekannt, um Kunststoffen eine Lasermarkierbarkeit oder eine Laserschweißbarkeit zu verleihen. Beispiele für laseraktivierbare Materialien sind ausgewählte Kupferverbindungen. Laseraktivierbare Kunststoffzusammensetzungen enthaltend solche Materialien sind z. B. beschrieben in der DE 10 2014 018 586 A1, DE 10 2004 051 246 A1, EP 697 433 B1 und EP 1 276 620 B1.

In vielen Industriezweigen wird die Kennzeichnung von Produktionsgütern zunehmend wichtiger. Häufig müssen Produktionsdaten, Chargennummern, Verfallsdaten, Barcodes, 2D-Codes, Firmenlogos oder Seriennummern, auf Kunststoffteile aufgebracht werden. Dabei gewinnt die berührungslose, sehr schnelle und flexible Markierung mit Lasern an Bedeutung. Damit ist es möglich, Beschriftungen mit hoher Geschwindigkeit auch auf eine nicht plane Oberfläche aufzubringen. Da sich die Beschriftung im Kunststoffkörper selbst befindet, ist sie dauerhaft abriebbeständig.

Da viele Kunststoffe für Laserlicht durchlässig sind, werden den Kunststoffen meist lasersensitive Mittel zugesetzt, die durch Absorption der Laserenergie im Kunststoffmaterial entweder direkt durch Wechselwirkung mit dem Polymer oder indirekt mit einem zugesetzten Material eine lokale, gut sichtbare Verfärbung hervorrufen. Das lasersensitive Mittel kann ein organischer Farbstoff oder ein Pigment sein, welches Laserlicht absorbiert. Für die Verfärbung kann es verschiedene Ursachen geben, z. B. die Zersetzung des Polymeren oder der Absorber selbst wird von einer unsichtbaren in eine sichtbare Form umgewandelt. In der Regel kommt es zu einer Dunkelfärbung des Kunststoffs durch Carbonisierung in Folge der eingetragenen Laserenergie.

In vielen Fällen ist es wünschenswert, einen dunklen Kontrast auf einem hellen Hintergrund zu bilden. Dafür wurde bereits der Einsatz von Kupferverbindungen vorgeschlagen. US 5,489,639 A offenbart den Einsatz von Kupferphosphat, Kupfersulfat oder Kupferthiocyanat in einem thermoplastischen Hartz. In EP 400 305 A1 wird die Verwendung von Kupferhydroxyphosphat vorgeschlagen. Die Verwendung von Kupferfumarat bzw. von Kupfermaleat ist Gegenstand der EP 1 276 620 B1.

Es wurde jetzt überraschend Additivmischungen für Kunststoffe auf der Basis von ausgewählten Phosphinaten gefunden, die in Kombination mit ausgewählten laseraktivierbaren Zusätzen Polymerzusammensetzungen sehr gute elektrische Werte, einen ausgezeichneten Flammschutz sowie eine gute Lasermarkierbarkeit verleihen.

Es war daher Aufgabe der vorliegenden Erfindung, Additivmischungen auf Basis phosphinathaltiger Flammschutzsysteme zur Verfügung zu stellen, die Polymeren alle vorgenannten Eigenschaften gleichzeitig verleihen, insbesondere sehr gute elektrische Werte (GWFI, GWIT, CTI), einen hohen Flammschutz, gekennzeichnet durch möglichst kurze Nachbrennzeiten ( UL 94, Zeit), sowie eine gute Lasermarkierbarkeit.

Gegenstand der Erfindung sind Additivmischungen für Kunststoffe enthaltend

- Phosphinsäuresalz der Formel (I) als Komponente A

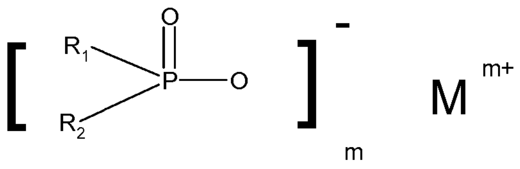 (I),

worin $R_1$ und $R_2$ Ethyl bedeuten,
M Al, Fe, $TiO_p$ oder Zn ist,
m 2 bis 3, vorzugsweise 2 oder 3, bedeutet, und
p = (4 - m) / 2 ist

- Verbindung ausgewählt aus der Gruppe der Al-, Fe-, $TiO_p$- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente B

- Phosphonsäuresalz der Formel II als Komponente C

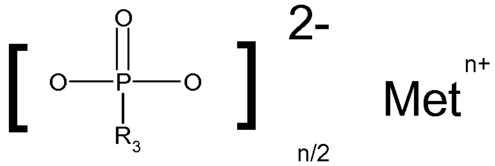 (II),

worin $R_3$ Ethyl bedeutet,
Met Al, Fe, $TiO_q$ oder Zn ist,
n 2 bis 3, vorzugsweise 2 oder 3, bedeutet, und
q = (4 - n) / 2 ist, und

- Kupfer als Komponente D, wobei es sich bei der Komponente D um ein Kupfersalz handelt.

In den erfindungsgemäßen Additivmischungen beträgt der Anteil an Komponente A üblicherweise 5 bis 85 Gew.-%, vorzugsweise 10 bis 60 Gew.-%.
In den erfindungsgemäßen Additivmischungen beträgt der Anteil an Komponente B üblicherweise 0,01 bis 10 Gew.-%, vorzugsweise 0,1 bis 2,5 Gew.-%.
In den erfindungsgemäßen Additivmischungen beträgt der Anteil an Komponente C üblicherweise 0,01 bis 10 Gew.-%, vorzugsweise 0,1 bis 2,5 Gew.-%.
In den erfindungsgemäßen Additivmischungen beträgt der Anteil an Komponente D üblicherweise 0,0001 bis 10 Gew.-%, vorzugsweise 0,1 bis 3 Gew.-%.
Dabei beziehen sich die Prozentangaben für die Anteile der Komponenten A bis E auf die Gesamtmenge der Additivmischungen.
Bevorzugt werden Additivmischungen, bei denen

- der Anteil von Komponente A 5 bis 85 Gew.-%,
- der Anteil von Komponente B 0,01 bis 10 Gew.-%,
- der Anteil von Komponente C 0,01 bis 10 Gew.-%, und
- der Anteil von Komponente D 0,0001 bis 10 Gew.-%, beträgt,

wobei die Prozentangaben sich auf die Gesamtmenge der Additivmischungen beziehen.
Besonders bevorzugt werden Additivmischungen bei denen

- der Anteil von Komponente A 10 bis 60 Gew.-%,
- der Anteil von Komponente B 0,1 bis 2,5 Gew.-%,
- der Anteil von Komponente C 0,1 bis 2,5 Gew.-%, und
- der Anteil von Komponente D 0,1 bis 3 Gew.-%, beträgt,

wobei die Prozentangaben sich auf die Gesamtmenge der Additivmischungen beziehen.

Bevorzugt eingesetzte Salze der Komponente A sind solche, worin $M^{m+}$ $Zn^{2+}$, $Fe^{3+}$ oder insbesondere $Al^{3+}$ bedeuten.

Bevorzugt eingesetzte Salze der Komponente B sind Zink-, Eisen- oder insbesondere Aluminiumsalze.

Bevorzugt eingesetzte Salze der Komponente C sind solche, worin $Met^{n+}$ $Zn^{2+}$, $Fe^{3+}$ oder insbesondere $Al^{3+}$ bedeuten.

Ganz besonders bevorzugt werden Additivmischungen, in denen M und Met Al bedeuten, m und n 3 sind und in denen die Verbindungen der Komponente B als Aluminiumsalze vorliegen.

Die erfindungsgemäß als Komponente A eingesetzten Salze von Diethylphospinsäure sind bekannte Flammschutzmittel für polymere Formmassen.

Auch Salze von Diethylphosphinsäure mit Anteilen der erfindungsgemäß als Komponenten B und C eingesetzten Phosphinsäure- und Phosphonsäuresalze sind bekannte Flammschutzmittel. Die Herstellung dieser Stoffkombinationen wird z. B. in US 7,420,007 B2 beschrieben.

Die erfindungsgemäß eingesetzten Salze von Diethylphosphinsäure der Komponente A können geringe Mengen an Salzen der Komponente B und an Salzen der Komponente C enthalten, beispielsweise bis zu 10 Gew.-% an Komponente B, vorzugsweise 0,01 bis 6 Gew. %, und insbesondere 0,2 bis 2,5 Gew.-% davon, und bis zu 10 Gew.-% an Komponente C, vorzugsweise 0,01 bis 6 Gew. %, und insbesondere 0,2 bis 2,5 Gew.-% davon, bezogen auf die Menge an Komponenten A, B und C.

Die erfindungsgemäß als Komponente C eingesetzten Salze der Ethylphosphonsäure sind als Zusätze zu Diethylphospinaten in Flammschutzmitteln für polymere Formmassen ebenfalls bekannt, beispielsweise aus WO 2016/065971 A1.

Bevorzugt sind Additivmischungen, die als Komponente D 0,06 bis 1,65 Gew.-%, besonders bevorzugt 0,11 bis 1,1 Gew.-% an Kupfer enthalten.

Die Verwendung der erfindungsgemäß als Komponente D eingesetzten Kupfersalze für Anwendungen in der Lasermarkierung oder im Laserschweißen ist bekannt, wie oben dargelegt.

Das erfindungsgemäß als Komponente D eingesetzte Kupfersalz kann als solches eingesetzt werden, beispielsweise in der Form von Teilchen mit hoher spezifischer Oberfläche, oder das Kupfersalz kann auf einem Träger aufgebracht werden, beispielsweise auf einem Metalloxid, insbesondere auf Titandioxid sowie auf Glimmer, Calciumcarbonat, Aluminium, Aluminiumoxid, Bentonit, Tonminerale, Saponit, Hectorit, Montmorillonit und/oder Hydrotalcit.

Bevorzugte Komponenten D sind Kupfersulfat, Kupferphosphat, Kupferhydroxidphosphat, Kupferthiocyanat, Kupfersalze von ein- oder zweiwertigen Carbonsäuren, insbesondere Kupferfumarat oder Kupfermaleat, oder mit Kupfer dotiertes Zinksulfid.

Geeignet sind auch Kupfersulfide, Fast Green GG 01, Kupferhydroxidphosphate, Kupfereisenphospide, Kupferzinnphosphide, Kupfer(I)oxid, Kupfer(II)oxid, Kupferhydroxid, Kupfer enthaltende Metalloxiden Kupferoxidspinell, Kupferchromoxidspinell, Kupferborat, Kupferhydroxidcarbonat und Kupferthiocarbonat.

Geeignet sind weiterhin Kupfersalze von ein- oder zweiwertigen Carbonsäuren, insbesondere Kupferfumarat oder Kupfermaleat, ebenso Kupferformiat, -acetat, -propionat, -butyrat, -benzoat, -naphtoat, -oxalat, -phthalat, -glytarat, -methylsuccinat, -adipat, -pimelat, -alpha-methyl-alpha-ethylsuccinat, -trimethylsuccinat, -suberat, -azelat, -sebacinat, -naphthalat, -acrylat, -oleat, -cinnamat, -glycolat, -lactat, -glycerat, -tartrat, -citrat und -salicylat.

Geeignet sind zudem Kupfersilicat, -phosphit, -diphosphat, -metaphosphat, -triphosphat, -thiophosphat, -antimonat, -wismutat, -sulfid und -sulfit.

Bevorzugte Beispiele für Kupfersulfate oder Kupferhydroxidphosphate sind $Cu_3(PO_4)_2 \cdot 2Cu(OH)_2$ (= Libethenit), $Cu_3(PO_4)_2 \cdot Cu(OH)_2$, $Cu_2P_2)O_7 \cdot H_2O$, $4CuO \cdot P_2O_5 \cdot H_2O$, $5CuO \cdot P_2O_5 \cdot 3H_2O$, $6CuO \cdot P_2O_5 \cdot 3H_2O$, $4CuO \cdot P_2O_5 \cdot 3H_2O$, $4CuO \cdot P_2O_5 \cdot 1{,}2H_2O$, $4CuO \cdot P_2O_5 \cdot 1{,}5H_2O$ oder Gemische von zwei oder mehreren davon.

Bevorzugt wird $Cu_3(POa)_2 \cdot 2Cu(OH)_2$ als Komponente D eingesetzt.

Als Komponente D bevorzugt sind Mischungen von Zinn(II)phosphat und Kupfer(II)hydroxidphosphat (Gewichtsverhältnis 95:5 bis 50:5).

Als Komponente D ebenfalls bevorzugt sind Mischungen von Kupfer(II)hydroxidphosphat und Eisenphosphit (Gewichtsverhältnis 70:30 bis 30:70).

Ebenfalls bevorzugt wird mit Kupfer dotiertes Zinksulfid als Komponente D eingesetzt. Der Gehalt an Kupfer im Zinksulfid beträgt vorzugsweise 0,5 bis 15 Mol-% Cu, insbesondere 1 bis 6 Mol-%, bezogen auf die Summe aus Zinksulfid und Kupfersulfid.

Mit Kupfersulfid beschichtetes Zinksulfid ist bekannt, beispielsweise aus der DE 39 29 056 A1.

Weiterhin kann die spezifische Oberfläche des mit Kupfer dotierten Zinksulfids oder anderer Kupfersalze das Markierergebnis beeinflussen. Vorzugsweise beträgt die BET-Oberfläche der als Komponente D eingesetzten Materialien > 5 $m^2/g$, insbesondere > 7 $m^2/g$.

Auch kann die Teilchengröße der als Komponente D eingesetzten Materialien das Markierungsergebnis beeinflussen. Für die Erzeugung von kontrastreichen Markierungen mit hoher Kantenschärfe ist es vorteilhaft, wenn die Teilchengröße der Materialien 20 - 1000 nm, insbesondere 50 - 500 nm, beträgt.

Die erfindungsgemäß eingesetzten Laserpigmente können schon bei der Herstellung durch geeignete Prozessparameter als feinteiliges Pulver hoher spezifischer Oberfläche und mit Teilchengrößen von 10 μm oder weniger gewonnen werden. Es ist aber auch möglich größere Partikel oder größere Aggregate mit Hilfe geeigneter Mühlen, z. B. Luftstrahlmühlen und/oder Perlmühlen, auf die gewünschte Teilchengröße zu vermahlen.

In einer weiteren bevorzugten Ausführungsform enthält die erfindungsgemäße Additivmischung als Komponente E ein anorganisches Phosphonat.

Die Verwendung der erfindungsgemäß als Komponente E eingesetzten anorganischen Phosponate oder auch Salzen der phosphorigen Säure (Phosphite) als Flammschutzmittel ist bekannt. So offenbart WO 2012/045414 A1 Flammschutzmittelkombinationen, die neben Phosphinsäuresalzen auch Salze der phosphorigen Säure (= Phosphite) enthalten.

Bevorzugt entspricht das anorganische Phosphonat (Komponente E) den allgemeinen Formeln (IV) oder (V)

$$[(HO)PO_2]^{2-}{}_{p/2}\ Kat^{p+} \qquad (IV)$$

$$[(HO)_2PO]^{-}{}_{p}\ Kat^{p+} \qquad (V)$$

worin Kat ein p-wertiges Kation, ausgenommen Kupfer, insbesondere ein Kation eines Alkalimetalls, Erdalkalimetalls, ein Ammoniumkation und/oder ein Kation von Fe, Zn oder insbesondere von Al einschließlich der Kationen Al(OH) oder $Al(OH)_2$ ist, und p 1, 2, 3 oder 4 bedeutet.

Bevorzugt handelt es sich bei dem anorganischen Phosphonat (Komponente E) um Aluminiumphosphit $[Al(H_2PO_3)_3]$, sekundäres Aluminiumphosphit $[Al_2(HPO_3)_3]$, basisches Aluminiumphosphit $[Al(OH)(H_2PO_3)_2{*}2aq]$, Aluminiumphosphittetrahydrat $[AL_2(HPO_3)_3{*}4aq]$, Aluminiumphosphonat, $Al_7(HPO_3)_9(OH)_6(1{,}6\text{-}Hexandiamin)_{1,5}{*}12H_2O$, $Al_2(HPO_3)^{3*}xAl_2O_3{*}nH_2O$ mit x = 2,27 - 1 und/oder $Al_4H_6P_{16}O_{18}$.

Bei dem anorganischen Phosphonat (Komponente E) handelt es sich bevorzugt auch um Aluminiumphosphite der Formeln (VI), (VII) und/oder (VIII)

$$Al_2(HPO_3)_3 \times (H_2O)_q \qquad (VI),$$

wobei q 0 bis 4 bedeutet,

$$Al_{2,00}M_z(HPO_3)_y(OH)_v \times (H_2O)_w \qquad (VII),$$

wobei M Alkalimetallkationen, z 0,01 bis 1,5 und y 2,63 bis 3,5 und v 0 bis 2 und w 0 bis 4 bedeutet;

$$Al_{2,00}(HPO_3)_u(H_2PO_3)_t \times (H_2O)_s \qquad (VIII),$$

wobei u 2 bis 2,99 und 12 bis 0,01 und s 0 bis 4 bedeutet,
und/oder
um Aluminiumphosphit $[Al(H2PO_3)_3]$, um sekundäres Aluminiumphosphit $[Al_2(HPO_3)_3]$, um basisches Aluminiumphosphit $[Al(OH)(H_2PO_3)_2{*}2aq]$, um Aluminiumphosphittetrahydrat $[Al_2(HPO_3)_3{*}4aq]$, um Aluminiumphosphonat, um $Al_7(HPO_3)_9(OH)_6(1{,}6\text{-}Hexandiamin)_{1,5}{*}12H_2O$, um $Al_2(HPO_3)^{3*}xAl_2O_3{*}nH_2O$ mit x = 2,27 - 1 und/oder $Al_4H_6P_{16}O_{18}$.

Bevorzugte anorganische Phosphonate (Komponente E) sind in Wasser unlösliche bzw. schwerlösliche Salze.

Besonders bevorzugte anorganische Phosphonate sind Aluminium-, Calcium- und Zinksalze.

Besonders bevorzugt handelt es sich bei Komponente E um ein Umsetzungsprodukt aus phosphoriger Säure und einer Aluminiumverbindung.

Besonders bevorzugte Komponenten E sind Aluminiumphosphite mit den CAS-Nummern 15099-32-8, 119103-85-4, 220689-59-8, 56287-23-1, 156024-71-4, 71449-76-8 und 15099-32-8.

Die Herstellung der bevorzugt eingesetzten Aluminiumphosphite erfolgt durch Umsetzung einer Aluminiumquelle mit einer Phosphorquelle und wahlweise einem Templat in einem Lösungsmittel bei 20 - 200 °C während einer Zeitspanne bis zu 4 Tagen. Aluminiumquelle und Phosphorquelle werden dazu 1 - 4 h vermischt, unter hydrothermalen Bedingungen oder am Rückfluss erhitzt, abfiltriert, gewaschen und z. B. bei 110 °C getrocknet.

Bevorzugte Aluminiumquellen sind Aluminiumisopropoxid, Aluminiumnitrat, Aluminiumchlorid, Aluminiumhydroxid (z. B. Pseudoböhmit).

Bevorzugte Phosphorquellen sind Phosphorige Säure, (saures) Ammoniumphosphit, Alkaliphosphite oder Erdalkaliphosphite.

Bevorzugte Alkaliphosphite sind Dinatriumphosphit, Dinatriumphosphithydrat, Trinatriumphosphit, Kaliumhydrogenphosphit

Bevorzugtes Dinatriumphosphithydrat ist Brüggolen® H10 der Fa. Brüggemann.

Bevorzugte Template sind 1,6-Hexandiamin, Guanidincarbonat oder Ammoniak.

Bevorzugtes Erdalkaliphosphit ist Calciumphosphit.

Das bevorzugte Verhältnis von Aluminium zu Phosphor zu Lösungsmittel ist dabei 1 : 1 : 3,7 bis 1 : 2,2 : 100 mol. Das Verhältnis von Aluminium zu Templat ist 1 : 0 bis 1 : 17 mol. Der bevorzugte pH-Wert der Reaktionslösung ist 3 bis 9. Bevorzugtes Lösungsmittel ist Wasser.

Besonders bevorzugt wird in der Anwendung das gleiche Salz der Phosphinsäure wie der phosphorigen Säure verwendet, also z. B. Aluminiumdiethylphosphinat zusammen mit Aluminiumphosphit oder Zinkdiethylphosphinat zusammen mit Zinkphosphit.

In einer bevorzugten Ausführungsform enthalten die oben beschriebenen Additivmischungen als Komponente E eine Verbindung der Formel (III)

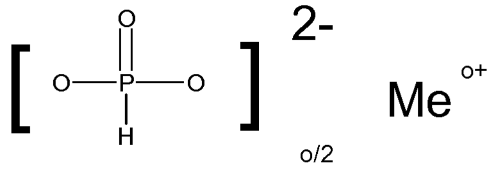

(III),

worin Me Fe, $TiO_r$, Zn oder insbesondere Al ist,
o 2 bis 3, vorzugsweise 2 oder 3, bedeutet, und
r = (4 - o) / 2 ist.

Bevorzugt eingesetzte Verbindungen der Formel III sind solche, worin $Me^{o+}$ $Zn^{2+}$, $Fe^{3+}$ oder insbesondere $Al^{3+}$ bedeuten.

In den erfindungsgemäßen Additivmischungen beträgt der Anteil an Komponente E üblicherweise zwischen 0 und 50 Gew.-%, vorzugsweise 0,01 bis 50 Gew.-%, insbesondere 0,02 bis 25 Gew.-%, bezogen auf die Gesamtmenge der Additivmischungen.

In einer weiteren bevorzugten Ausführungsform liegen Komponenten A, B und C und gegebenenfalls E in Teilchenform vor, wobei die mittlere Teilchengröße ($d_{50}$) 1 bis 100 μm beträgt.

In einer weiteren bevorzugten Ausführungsform enthält die erfindungsgemäße Additivmischung als Komponente H ein Melaminpolyphosphat mit einem mittleren Kondensationsgrad von größer gleich 20.

Die Verwendung der erfindungsgemäß als Komponente H eingesetzten Polyphosphatderivate von Melamin mit einem Kondensationsgrad von größer gleich 20 als Flammschutzmittel ist bekannt. So offenbart die DE 10 2005 016 195 A1 ein stabilisiertes Flammschutzmittel enthaltend 99 bis 1 Gew.-% Melaminpolyphosphat und 1 bis 99 Gew.-% Additiv mit Reservealkalität. In diesem Dokument wird auch offenbart, dass dieses Flammschutzmittel mit einer Phosphinsäure und/oder einem Phosphinsäuresalz kombiniert werden kann.

Bevorzugte erfindungsgemäße Additivmischungen enthalten als Komponente H ein Melaminpolyphosphat, dessen durchschnittlicher Kondensationsgrad 20 bis 200, insbesondere von 40 bis 150, beträgt.

Weitere bevorzugte erfindungsgemäße Additivmischungen enthalten als Komponente H ein Melaminpolyphosphat, das eine Zersetzungstemperatur von größer gleich 320 °C, insbesondere von größer gleich 360 °C und ganz besonders bevorzugt von größer gleich 400 °C aufweist.

Bevorzugt werden als Komponente H Melaminpolyphosphate eingesetzt, die aus WO 2006/027340 A1 (entsprechend EP 1 789 475 B1) und WO 2000/002869 A1 (entsprechend EP 1 095 030 B1) bekannt sind.

Bevorzugt werden Melaminpolyphosphate eingesetzt, deren durchschnittlicher Kondensationsgrad zwischen 20 und 200, insbesondere zwischen 40 und 150 liegt, und deren Melamingehalt 1,1 bis 2,0 mol, insbesondere 1,2 bis 1,8 mol pro Mol Phosphoratom beträgt.

In einem anderen bevorzugten Bereich beträgt der durchschnittliche Kondensationsgrad 2 bis 100.

Ebenfalls bevorzugt werden Melaminpolyphosphate eingesetzt, deren mittlerer Kondensationsgrat (Zahlenmittel) >20 ist, deren Zersetzungstemperatur größer als 320 °C ist, deren Molverhältnis von 1,3,5-Triazinverbindung zu Phosphor kleiner als 1,1, insbesondere 0,8 bis 1,0 beträgt und deren pH-Wert einer 10 %-igen Aufschlämmung in Wasser bei 25 °C 5 oder höher ist, vorzugsweise 5,1 bis 6,9.

In der erfindungsgemäßen Additivmischung beträgt der Anteil an Komponente H üblicherweise 0 und 50 Gew.-%, vorzugsweise 0,1 bis 50 Gew.-%, insbesondere 0,5 bis 25 Gew.-%, bezogen auf die Gesamtmenge der Additivmischung.

Die Erfindung betrifft auch die Verwendung der erfindungsgemäßen Additivmischungen zur flammfesten Ausrüstung von lasermarkierbaren oder laserschweißbaren thermoplastischen und duroplastischen Polymeren sowie die mit diesen Additivmischungen flammfest und lasermarkierbar oder laserschweißbar ausgerüstete Polymerzusammensetzungen.

Thermoplastische und/oder duroplastische Polymere (nachstehend Komponente F) enthaltend die erfindungsgemäßen Additivmischungen und gegebenenfalls

Füll- und Verstärkungsstoffe und/oder andere Zusätze, wie unten definiert, werden im Folgenden als Polymerzusammensetzungen bezeichnet.

Bei den thermoplastischen Polymeren, in denen die erfindungsgemäßen Additivmischungen wirksam eingesetzt werden können, handelt es sich um amorphe thermoplastische Polymere oder um teilkristalline thermoplastische Polymere. Derartige Polymere sind in der Literatur bereits ausführlich beschrieben und sind dem Fachmann bekannt.

Zu den erfindungsgemäß eingesetzten thermoplastischen Polymeren gehören beispielsweise

1. Polymere von Mono- und Diolefinen, beispielsweise Polypropylen, Polyisobutylen, Polybutylen, Polybuten-1, Polyisopropren oder Polybutadien sowie Polymerisate von Cycloolefinen wie etwa von Cyclopenten oder von Norbornen; ferner Polyethylen, welches gegebenenfalls vernetzt sein kann; z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).

2. Mischungen der vorgenannten Polymere, beispielsweise Mischungen von Polypropylen mit Polyisobutylen, Polypropylen mit Polyethylen (z. B. PP/HDPE, PP/LDP) und Mischungen verschiedener Polyethylentypen wie etwa LDPE/HDPE.

3. Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere etc. Ferner Ethylen-Alkylacrylat-Copolymere, Ethylen- Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit den unter 1. genannten Polymeren, z. B. Polypropylen/-Ethylen-Propylen-Copolymere, LDPE/Ethylen-Vinylacetat-Copolymere, LDPE/Ethylen-Acrylsäure- Copolymere, LLDPE/Ethylen-Vinylacetat-Copolymere, LLDPE/Ethylen- Acrylsäure-Copolymere, und alternierend oder statistisch aufgebaute Polyalkylen/Kohlenstoffmonoxid-Copolymere und deren Mischungen mit anderen Polymeren wie z. B. Polyamiden.

4. Polystyrol, Poly(p-methylstyrol), Poly-(alpha-methylstyrol).

5. Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien- Alkylacrylat und -methacrylat, Styrol-Maleinsäureanhydrid, Styrol-Acrylnitril- Methycrylat; Mischungen von hoher Schlagzähigkeit aus Styrol-Copolymeren und einem anderen Polymer, wie z. B. einem Polyacrylat, einem Dienpolymeren oder einem Ethylen-Propylen-Dien-Terpolymeren; sowie Block-Copolymere des Styrols wie z. B. Styrol-Butadien-Styrol, Styrol-Isopren-Styrol, Styrol-Ethylen/Butylen-Styrol oder Styrol-Ethylen/Propylen-Styrol.

6. Propfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (oder Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien, Styrol und Maleinsäureimid auf Polybutadien; Styrol und Alkylacrylate bzw. Alkylmethacrylate auf Polybutadien; Styrol und Acrylnitril auf Ethylen-Propylen-Dien-Terpolymeren; Styrol und Acrylnitril auf Polyalkylacrylaten oder Polyalkylmethacrylaten; Styrol und Acrylnitril auf Acrylat-Butadien-Copolymere, sowie deren Mischungen mit den unter 5. genannten Polymeren, wie sie z. B. als sogenannte ABS-, MBS-, ASA- oder AES-Polymere bekannt sind.

7. Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.

9. Copolymere der unter 8. genannten Monomere untereinander oder mit anderen ungesättigten Monomeren, wie z. B. Acrylnitril-Butadien-Copolymere, Acrylnitril- Alkylacrylat-Copolymere, Acrylnitril-Alkoxyalkylacrylat-Copolymere, Acrylnitril- Vinylhalogenid-Copolymere oder Acrylnitril-Alkylmethacrylat-Butadien- Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit den unter 1. genannten Olefinen.

11. Polyacetale, wie Polyoxymethylen, sowie solche Polyoxymethylene, die Comonomere, wie z. B. Ethylenoxid enthalten; Polyacetale, die mit thermoplastischen Polyurethanen, Acrylaten oder MBS modifiziert sind.

12. Polyphenylenoxide und -sulfide und deren Mischungen mit Styrolpolymeren oder Polyamiden.

13. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12; oder aromatische Polyamide ausgehend von m-Xylol und Adipinsäure; Polyamide, hergestellt aus Hexamethylendiamin und Iso- und/oder Terephthalsäure und gegenbenenfalls einem Elastomer als Modifikator, z. B. Poly-2,4,4-trimethylhexamethlyen-terephthalamid oder Poly-m-phenylenisophthalamid; Block-Copolymere der vorgenannten Polyamide mit Polyolefinen, Olefin-Copolymeren, Ionomeren, oder chemisch gebundenen oder gepropften Elastomeren; oder mit Polyethern, wie z. B. mit Polyethylenglykol, Polypropylen-glykol oder Polytetramethylenglykol. Ferner mit EPDM oder ABS modifizierte Polyamide oder Copolyamide; sowie während der Verarbeitung kondensierte Polyamide ("RIM-Polyamidsysteme").

14. Polyharnstoffe, Polyimide, Polyamidimide, Polyetherimide, Polyesterimide, Polyhydantoine und Polybenzimidazole.

15. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, sowie Block-Polyetherester, die sich von Polyethern mit Hydroxylendgruppen ableiten; ferner mit Polycarbonaten oder MBS modifizierte Polyester.

16. Polycarbonate und Polyestercarbonate.

17. Polysulfone, Polyethersulfone und Polyetherketone.

18. Mischungen (Polyblends) der vorgenannten Polymere, wie z. B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere.

19. Thermoplastische Elastomere (TPE), wie Block-Copolymere basierend auf Styrol (Styrol-Butadien-Blockcopolymere, Styrol -Isopren- Styrol-Blockcopolymere, Styrol-Ethylen-Butylen-Styrol-Block-Copolymere), Block-Copolymere auf Basis von thermoplastischen Polyesterelastomeren, Etherbasierende und / oder Esterbasierende Block-Copolymere bestehend aus alternierenden Blöcken aus Diisocyanaten und kurzkettigen Diolen und aus Diisocyanaten und lang-kettigen Diolen, Polyether-Block-Amide, Co-Polyamide und/oder Polyetheramide.

Bevorzugte TPE sind Elastomer-Blends, wie thermoplastische Olefine enthaltend Polypropylen-, Polyethylen-Block Copolymere; Polypropylen-, Ethylen-Propylen-Kautschuk, Ethylen-Octen-Copolymere, Styrol-Ethylen-Butadien-Styrol, Polyolefin-Ethylen-Propylen-Diene, Polyolefin-EthylenVinylacetat-Copolymere und/oder Polyolefin-Polyarylenether.

Bevorzugte TPE sind thermoplastische Vulkanisate, z. B. Ethylen-Propylen-Dien-Kautschukpartikel in einer Matrix aus Polypropylen.

Die duroplastischen Polymere, in denen die erfindungsgemäßen Additivmischungen wirksam eingesetzt werden können, sind in der Literatur ebenfalls bereits ausführlich beschrieben und sind dem Fachmann bekannt.

Bevorzugt handelt es sich bei den duroplastischen Polymeren um ungesättigte Polyesterharze (UP-Harze),

die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z. B. Peroxiden) und Beschleunigern.

Bevorzugte ungesättigte Dicarbonsäuren und -derivate zur Herstellung der UP-Harze sind Maleinsäureanhydrid und Fumarsäure.

Bevorzugte gesättigte Dicarbonsäuren sind Phthalsäure, Isophthalsäure, Terephthalsäure, Tetrahydrophthalsäure, Adipinsäure.

Bevorzugte Diole sind 1,2 Propandiol, Ethylenglycol, Diethylenglycol und Neopentylglycol, Neopentylglycol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren, z. B. Hydroperoxide und Cobaltoctanoat und/oder Benzoylperoxid und aromatische Amine und/oder UV-Licht und Photosensibilisatoren, z. B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid und Dicyclohexylperoxiddicarbonat.

Bevorzugte Metallcoinitiatoren sind Kobalt-, Mangan-, Eisen-, Vanadium-, Nickel- oder Bleiverbindungen.

Bevorzugte aromatische Amine sind Dimethylanilin, Dimethyl-p-toluol, Diethylanilin und Phenyldiethanolamine.

Weitere bevorzugte duroplastische Polymere sind Epoxidharze, die sich von aliphatischen, cycloaliphatischen, heterocyclischen oder aromatischen Glycidylverbindungen ableiten, z. B. von Bisphenol-A-diglycidylethern und Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind aliphatische, cycloaliphatische, aromatische und heterocyclische Amine oder Polyamine wie Ethylendiamin, Diethylentriamin Triethylentetramin, Propan-1,3-diamin, Hexamethylendiamin, Aminoethylpiperazin, Isophorondiamin, Polyamidoamin, Diaminodiphenylmethan, Diaminodiphenylether, Diaminodiphenolsulfone, Anilin-Formaldehyd-Harze, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,55-trimethylcyclohexylamin (Isophorondiamin), Polyamidoamine, Cyanguanidin und Dicyandiamid, ebenso mehrbasige Säuren oder deren Anhydride wie z. B. Phthalsäureanhydrid, Maleinsäureanhydrid, Tetrahydrophthalsäureanhydrid, Methyltetrahydrophthalsäureanhydrid, Hexahydrophthalsäureanhydrid und Methylhexahydrophthalsäureanhydrid sowie Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol-modifiziertes Phenol-Harz und Aminotriazinmodifiziertes Phenol-Harz. Die Härter können allein oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Bevorzugt handelt es sich bei den duroplastischen Polymeren um solche, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Ebenfalls bevorzugt handelt es sich bei den duroplastischen Polymeren um Acrylharze, die sich von substituierten Acrylsäureestern ableiten, wie z. B. von Epoxyacrylaten, Urethanacrylaten oder Polyesteracrylaten.

Weitere bevorzugt eingesetzte duroplastische Polymere sind Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Weitere bevorzugt eingesetzte duroplastische Polymere sind Polyurethane oder Polyharnstoffe, die durch Umsetzen von Polyisocyanaten oder Harnstoffen mit Polyolen oder Polyaminen erhalten worden sind.

Bevorzugte Polyole, sind Alkenoxidaddukte von Ethylenglykol, 1,2-Propandiol, Bisphenol A, Trimethylolpropan, Glycerin, Pentaerythrol, Sorbit, Zucker oder abgebauter Stärke. Es lassen sich auch Polyester-Polyole einsetzen. Diese können durch Polykondensation eines Polyalkoholes wie Ethylenglykol, Diethylenglykol, Propylenglykol, 1,4-Butandiol, 1,5-Pentandiol, Methylpentandiol, 1,6-Hexandiol, Trimethylolpropan, Glycerin, Pentaerythritol, Diglycerol, Traubenzucker und/oder Sorbit mit einer dibasischen Säure wie Oxalsäure, Malonsäure, Bernsteinsäure, Weinsäure, Adipinsäure, Sebacinsäure, Maleinsäure, Fumarsäure, Phthalsäure und/oder Terephthalsäure erhalten werden.

Geeignete Polyisocyanate sind aromatische, alicyclische oder aliphatische Polyisocyanate, mit nicht weniger als zwei Isocyanat-Gruppen und Mischungen davon. Bevorzugt sind aromatische Polyisocyanate, wie Tolyldiisocyanat, Methylendiphenyldiisocyanat, Naphthylendiisocyanate, Xylylendiisocyanat, Tris-4-isocyanatophenyl)methan und

Polymethylenpolyphenylendiisocyanate; alicyclische Polyisocyanate wie Methylendiphenyldiisocyanat, Tolyldiisocyanat; aliphatische Polyisocyanate und Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, Desmodur®-Typen (Bayer) und Lysindiisocyanat und Mischungen davon.

Geeignete Polyisocyanate sind auch modifizierte Produkte, die durch Reaktion von Polyisocyanat mit Polyol, Harnstoff, Carbodiimid und/oder Biuret erhalten werden.

Bevorzugt handelt es sich bei den erfindungsgemäß als Komponente F eingesetzten Polymeren um thermoplastische Polymere, besonders bevorzugt um Polystyrol-HI, Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol) oder PPE/HIPS (Polyphenylenether/Polystyrol- HI). Polystyrol-HI ist ein Polystyrol mit erhöhter Schlagzähigkeit.

Besonders bevorzugt eingesetzte thermoplastische Polymere sind PPE/HIPS Blends und ganz besonders bevorzugt Polyamide oder Polyester.

Die erfindungsgemäß eingesetzten Additivmischungen stabilisieren die Polymere (Komponente F) sehr gut gegen thermischen Abbau. Dieses zeigt sich an der Veränderung der spezifischen Viskosität von thermoplastischen Polymeren bei Compoundierung und Formgebung der erfindungsgemäßen Polymerzusammensetzungen. Die dort erfolgende thermische Belastung hat einen teilweisen Abbau der Polymerketten zur Folge, was in einer Verringerung des mittleren Molekular-gewichts und damit verbunden in einer Verringerung der Viskosität einer Polymerlösung ausdrückt.

So betragen beispielsweise typische Werte für die spezifische Viskosität von Polybutylenterephthalat, gemessen als 0,5 %-ige-Lösung in Phenol/Dichlorbenzol (1:1) bei 25 °C gemäß ISO 1628 mit einem Kapillarviskosimeter, etwa 130 $cm^3$/g. Nach dem Compoundieren und der Formgebung einer erfindungsgemäßen Polybutylenterephthalatzusammensetzung bewegen sich typische Werte für die spezifische Viskosität des verarbeiteten Polybutylenterephthalats (ermittelt wie oben angegeben) im Bereich zwischen 110 und 129 $cm^3$/g.

Bevorzugt werden für die genannte Verwendung die Flammschutzmittelkomponenten A bis C oder A bis C und E in einer Gesamtkonzentration von 1 bis 40 Gew.-%, insbesondere von 3 bis 30 Gew.-%, bezogen auf die Polymerzusammensetzung, eingesetzt.

In der erfindungsgemäßen Polymerzusammensetzung beträgt der Anteil an Komponente F üblicherweise 25 bis 95 Gew.-%, vorzugsweise 25 bis 75 Gew.-%.

In der erfindungsgemäßen Polymerzusammensetzung beträgt der Anteil an Komponente A üblicherweise 1 bis 35 Gew.-%, vorzugsweise 5 bis 20 Gew.-%.

In der erfindungsgemäßen Polymerzusammensetzung beträgt der Anteil an Komponente B üblicherweise 0,01 bis 3 Gew.-%, vorzugsweise 0,05 bis 1,5 Gew.-%.

In der erfindungsgemäßen Polymerzusammensetzung beträgt der Anteil an Komponente C üblicherweise 0,001 bis 1 Gew.-%, vorzugsweise 0,01 bis 0,6 Gew.-%.

In der erfindungsgemäßen Polymerzusammensetzung beträgt der Anteil an Komponente D üblicherweise 0,005 bis 2 Gew.-%, vorzugsweise 0,05 bis 1 Gew.-%.

In der erfindungsgemäßen Polymerzusammensetzung beträgt der Anteil an Komponente E üblicherweise 0 bis 10 Gew.-%, vorzugsweise 1 bis 8 Gew.-%.

In der erfindungsgemäßen Polymerzusammensetzung beträgt der Anteil an Komponente G üblicherweise 1 bis 25 Gew.-%, vorzugsweise 2 bis 10 Gew.-%.

Dabei beziehen sich die Prozentangaben für die Anteile der Komponenten A bis G auf die Gesamtmenge der Polymerzusammensetzung.

Bevorzugt sind erfindungsgemäße Polymerzusammensetzungen, die einen Comparative Tracking Index, gemessen nach dem International Electrotechnical Commission Standard IEC-60112/3, von größer gleich 500 Volt aufweisen.

Ebenfalls bevorzugte erfindungsgemäße Polymerzusammensetzungen erreichen eine Bewertung von V0 nach UL-94, insbesondere gemessen an Formteilen von 3,2 mm bis 0,4 mm Dicke.

Weitere bevorzugte erfindungsgemäße Polymerzusammensetzungen weisen einen Glow Wire Flammability Index nach IEC-60695-2-12 von größer gleich 960 °C auf, insbesondere gemessen an Formteilen von 0,75 - 3 mm Dicke.

Noch weitere bevorzugte erfindungsgemäße Polymerzusammensetzungen weisen eine Glühdrahtentzündungstemperatur (Glow Wire Ignition Temperature, GWIT) nach IEC-60695-2-13 von mindestens 775 °C, vorzugsweise von mindestens 800 °C, auf.

Bei den besonders bevorzugt als Komponente F eingesetzten Polyamiden handelt es sich in der Regel um Homo- oder Copolyamide, die sich von (cyclo)aliphatischen oder aromatischen Dicarbonsäuren oder deren polyamidbildenden Derivaten, wie deren Salzen, und von (cyclo)aliphatischen oder aromatischen Diaminen oder von (cyclo)aliphatischen oder aromatischen Aminocarbonsäuren oder deren polyamidbildenden Derivaten, wie deren Salzen, ableiten.

Als Edukte für Polyamide kommen aliphatische Dicarbonsäuren, bevorzugt Adipinsäure, 2,2,4- und 2,4,4-Trimethyladipinsäure, Azelainsäure und/oder Sebazinsäure, aromatische Dicarbonsäuren, bevorzugt Isophthalsäure

und/oder Terephthalsäure, aliphatische Diamine, bevorzugt Tetramethylendiamin, Hexamethylendiamin, 1,9-Nonandiamin, 2,2,4- und 2,4,4-Trimethylhexamethylendiamin, die isomeren Diaminodicyclohexylmethane, Diaminodicyclohexylpropane, Bis-aminomethylcyclohexan, aromatische Diamine, bevorzugt Phenylendiamin, Aminocarbonsäuren, bevorzugt Aminocapronsäure oder die entsprechenden Lactame in Betracht. Copolyamide aus mehreren der genannten Monomeren sind eingeschlossen. Besonders bevorzugt werden Caprolactame, ganz besonders bevorzugt wird ε-Caprolactam eingesetzt.

Bevorzugt handelt es sich bei den als Komponente F eingesetzten Polyamiden um aliphatische Homo- oder Copolyamide, insbesondere um Polyamid 12, Polyamid 4, Polyamid 4.6, Polyamid 6, Polyamid 6.6, Polyamid 6.9, Polyamid 6.10, Polyamid 6.12, Polyamid 6.66, Polyamid 7.7, Polyamid 8.8, Polyamid 9.9, Polyamid 10.9, Polyamid 10.10, Polyamid 11 oder Polyamid 12. Diese sind z. B. unter den Handelsnamen Nylon®, Fa. DuPont, Ultramid®, Fa. BASF, Akulon® K122, Fa. DSM, Zytel® 7301, Fa. DuPont; Durethan® B 29, Fa. Bayer und Grillamid®, Fa. Ems Chemie bekannt.

Besonders geeignete Komponenten F sind weiterhin auf PA6, PA6.6 und anderen aliphatischen Homo- oder Copolyamiden basierende Compounds, bei denen auf eine Polyamidgruppe in der Polymerkette 3 bis 11 Methylengruppen kommen.

Bevorzugt werden als Komponente F ein oder mehrere Polyamide ausgewählt aus der Gruppe bestehend aus PA 6, PA 6.6, PA 4.6, PA 12 und/oder PA 6.10 eingesetzt.

Besonders bevorzugt werden als Komponente F Polyamid 6.6 oder Polymer-Gemische aus Polyamid 6.6 und Polyamid 6 eingesetzt.

Ganz besonders bevorzugt werden als Komponente F Polyamidgemische eingesetzt, die zu mindestens 75 Gew.-% aus Polyamid 6.6 und zu höchstens 25 Gew.-% aus Polyamid 6 bestehen.

Bei den bevorzugt als Komponente F eingesetzten Polyestern handelt es sich in der Regel um (cyclo)aliphatische oder um aromatisch-aliphatische Polyester, die sich von (cyclo)aliphatischen und/oder aromatischen Dicarbonsäuren oder deren polyesterbildenden Derivaten, wie deren Dialkylestern oder Anhydriden, und von (cyclo)aliphatischen und/oder araliphatischen Diolen oder von (cyclo)aliphatischen und/oder aromatischen Hydroxycarbonsäuren oder deren polyesterbildenden Derivaten, wie deren Alkylestern oder Anhydriden, ableiten. Der Begriff "(cyclo)aliphatisch" umfasst cycloaliphatische und aliphatische Verbindungen.

Thermoplastische Polyester werden vorzugsweise ausgewählt aus der Gruppe der Polyalkylenester von aromatischen und/oder aliphatischen Dicarbonsäuren oder deren Dialkylestern.

Bevorzugt eingesetzte Komponenten F sind aromatisch-aliphatische thermoplastische Polyester und davon bevorzugt thermoplastische Polyester abgeleitet durch Umsetzung von aromatischen Dicarbonsäuren oder deren polyester-bildenden Derivaten mit aliphatischen $C_2$-$C_{10}$-Diolen, insbesondere mit $C_2$-$C_4$-Diolen.

Erfindungsgemäß bevorzugt eingesetzte Komponenten F sind Polyalkylenterepthalate, und davon besonders bevorzugt Polyethylenterephthalate oder Polybutylenterephthalate.

Polyalkylenterephthalate enthalten vorzugsweise mindestens 80 mol-%, insbesondere 90 mol-%, bezogen auf die Dicarbonsäure, von Terephthalsäure abgeleitete Einheiten.

Die erfindungsgemäß als Komponente F bevorzugt eingesetzten Polyalkylenterephthalate können neben Terephthalsäureresten bis zu 20 mol-% Reste anderer aromatischer Dicarbonsäuren mit 8 bis 14 C-Atomen oder Reste aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin- oder Azelainsäure, Cyclohexandiessigsäure oder Cyclohexandicarbonsäure.

Die erfindungsgemäß als Komponente F bevorzugt eingesetzten Polyalkylenterephthalate können durch Einbau relativ kleiner Mengen 3- oder 4-wertiger Alkohole oder 3- oder 4-basischer Carbonsäuren, wie sie z. B. in der DE-A-19 00 270 beschrieben sind, verzweigt werden. Beispiele für bevorzugte Verzweigungsmittel sind Trimesinsäure, Trimellitsäure, Trimethylolethan und -propan und Pentaerythrit.

Besonders bevorzugte Komponenten F sind Polyalkylenterephthalate, die allein aus Terephthalsäure und deren reaktionsfähigen Derivaten (z. B. deren Dialkylestern) und Ethylenglykol und/oder Propandiol-1,3 und/oder Butandiol-1,4 hergestellt werden (Polyethylen- und Polytrimethylen- und Polybutylenterephthalat) und Mischungen dieser Polyalkylenterephthalate.

Bevorzugte Polybutylenterephthalate enthalten mindestens 80 mol-%, vorzugsweise 90 mol-%, bezogen auf die Dicarbonsäure, Terephthalsäurereste und mindestens 80 mol-%, vorzugsweise mindestens 90 mol-%, bezogen auf die Diolkomponente Butandiol-1,4-reste.

Die bevorzugten Polybutylenterephthalate können des Weiteren neben Butandiol-1,4-resten bis zu 20 mol-% anderer aliphatischer Diole mit 2 bis 12 C-Atomen oder cycloaliphatischer Diole mit 6 bis 21 C-Atomen enthalten, z. B. Reste von Ethylenglykol; Propandiol-1,3; 2-Ethylpropandiol-1,3; Neopentylglykol; Pentandiol-1,5; Hexandiol-1,6; Cyclohexandimethanol-1,4; 3-Methylpentandiol-2,4; 2-Methylpentandiol-2,4; 2,2,4-Trimethylpentandiol-1,3; 2-Ethylhexandiol-1,3; 2,2-Diethylpropandiol-1,3; Hexandiol-2,5;1,4-Di-([beta]-hydroxyethoxy)-benzol; 2,2-Bis-(4-hydroxycyclohexyl)-propan; 2,4-Dihydroxy-1,1,3,3-tetramethyl-cyclobutan; 2,2-Bis-(3-[beta]-hydroxyethoxyphenyl)-propan und 2,2-Bis-(4-hydroxypropoxyphenyl)-propan.

Erfindungsgemäß bevorzugt als Komponente F eingesetzte Polyalkylenterephthalate sind auch Copolyester, die aus mindestens zwei der oben genannten Säurekomponenten und/oder aus mindestens zwei der oben genannten Alkoholkomponenten und/oder Butandiol-1,4 hergestellt werden.

Die als Komponente F eingesetzten thermoplastischen Polyester können auch im Gemisch mit anderen Polyestern und/oder weiteren Polymeren eingesetzt werden.

Die erfindungsgemäßen Polymerzusammensetzungen können als Komponente G noch weitere Additive enthalten. Bevorzugte Komponenten G im Sinne der vorliegenden Erfindung sind Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmittel, Weichmacher, Verarbeitungshilfsmittel, Schlagzähmodifikatoren, Farbstoffe oder Pigmente, die sich von Komponente D unterscheiden, Füllstoffe, Verstärkungsstoffe und/oder weitere Flammschutzmittel, die sich von Komponenten A, B, C und E unterscheiden.

Hierzu gehören insbesondere Phosphate, wie etwa Melamin-Poly(Metallphosphate). Bevorzugte Metalle hierfür sind die Elemente der 2. Hauptgruppe, der 3. Hauptgruppe, der 2. Nebengruppe, der 4. Nebengruppe und der Nebengruppe VIIIa des Periodensystems sowie Cer und/oder Lanthan.

Melamin-Poly(Metallphosphate) sind bevorzugt Melamin-Poly(Zinkphosphate), Melamin-Poly(Magnsiumphosphate) und/oder Melamin-Poly(Calciumphosphate).

Bevorzugt sind (Melamin)$_2$Mg($HPO_4$)$_2$, (Melamin)$_2$Ca($HPO_4$)$_2$, (Melamin)$_2$Zn(HPO4)$_2$, (Melamin)$_3$Al($HPO_4$)$_3$, (Melamin)$_2$Mg($P_2O_7$), (Melamin)$_2$Ca($P_2O_7$), (Melamin)$_2$Zn($P_2O_7$), (Melamin)$_3$Al($P_2O_7$)$_{3/2}$.

Bevorzugt sind Melamin-Poly(Metallphosphate), die bekannt sind als Hydrogenphosphato- oder Pyrophosphato-Metallate mit Komplex-Anionen, die ein vier- oder sechsbindiges Metallatom als Koordinationszentrum mit zweizähnigen Hydrogenphosphat- oder Pyrophosphat-Liganden aufweisen.

Bevorzugt sind auch Melamin-interkalierte Aluminium-, Zink- oder MagnesiumSalze von kondensierten Phosphaten, ganz besonders bevorzugt sind Bis-Melamin-zinko-diphosphat und/oder Bis-Melamin-alumotriphosphat.

Bevorzugt sind weiterhin Salze der Elemente der 2. Hauptgruppe, der 3. Hauptgruppe, der 2. Nebengruppe, der 4. Nebengruppe und der Nebengruppe VIIIa des Periodensystems sowie von Cer und/oder Lanthan mit Anionen der Oxosäuren der fünften Hauptgruppe (Phosphate, Pyrophosphate und Polyphosphate).

Bevorzugt sind Aluminiumphosphate, Aluminum monophosphate; Aluminumorthophosphate ($AlPO_4$), Aluminumhydrogenphosphat ($Al_2(HPO_4)_3$) und/oder Aluminiumdihydrogenphosphat

Bevorzugt sind auch Calciumphosphat, Zinkphosphat, Titanphosphat und/oder Eisenphosphat

Bevorzugt sind Calciumhydrogenphosphat, Calciumhydrogenphosphatdihydrat, Magnesiumhydrogenphosphat, Titaniumhydrogenphosphat (TIHC) und/oder Zinkhydrogenphosphat

Bevorzugt sind Aluminiumdihydrogenphosphat, Magnesiumdihydrogenphosphat, Calciumdihydrogenphosphat, Zinkdihydrogenphosphat, Zinkdihydrogenphosphat dihydrat und/oder Aluminumdihydrogenphosphat.

Besonders bevorzugt sind Calciumpyrophosphat, Calciumdihydrogenpyrophosphat, Magnesiumpyrophosphat Zinkpyrophosphat und/oder Aluminiumpyrophosphat.

Die vorgenannten sowie andere und ähnliche Phosphate werden beispielsweise durch die Firma J.M. Huber Corporation, USA, unter Satire® Products angeboten, hierzu gehören etwa die Typen APP Type II, AMPP, MPP, MPyP, PiPyP. PPaz, Satire® 400, Satire® 600, EDAP und andere.

Weitere Phosphate sind beispielsweise in der JP-A-2004204194, der DE-A-102007036465 und der EP-A-3133112 genannt und gehören ausdrücklich zu den einsetzbaren Komponenten I.

Der Anteil von Komponente(n) G in der erfindungsgemäßen Polymerzusammensetzung beträgt in der Regel bis zu 60 Gew.-%, vorzugsweise zwischen 10 und 50 Gew.-%, bezogen auf die Gesamtmenge der Polymerzusammensetzung.

Besonders bevorzugt werden erfindungsgemäße Polymerzusammensetzungen, die Füllstoffe und/oder insbesondere Verstärkungsstoffe enthalten, bevorzugt Glasfasern. Es können auch Mischungen aus zwei oder mehreren unterschiedlichen Füllstoffen und/oder Verstärkungsstoffen, eingesetzt werden.

Der Anteil an Füllstoffen und/oder Verstärkungsstoffen in der erfindungsgemäßen Polymerzusammensetzung beträgt üblicherweise 1 bis 45 Gew.-%, vorzugsweise 20 bis 40 Gew.-%.

In einer bevorzugten Ausführungsform enthält die erfindungsgemäße Polymerzusammensetzung zur Erhöhung der Schreibgeschwindigkeit oder der Schweißgeschwindigkeit ein streuendes Additiv, beispielsweise ein Weißpigment oder einen Füllstoff allein oder in Kombination. Beispiele für streuende Additive sind Titandioxid, Calciumcarbonat, Magnesiumcarbonat oder Glaskugeln. Typische Mengen von streuenden Addditiven bewegen sich im Bereich von 0,1 bis 1 Gew.-% bezogen auf die Gesamtmenge der Polymerzusammensetzung.

Die weiteren Additive G sind als Zusätze zu Polymerzusammensetzungen an sich bekannt und können alleine oder in Mischung oder in Form von Masterbatches eingesetzt werden.

Unter Einwirkung von Laserlicht zeigen die erfindungsgemäßen Polymerzusammensetzungen eine Markierung mit hohem Kontrast und ausgeprägter Kantenschärfe.

Neben den hervorragenden optischen Eigenschaften, Kontrast und Kantenschärfe, ermöglichen die erfindungsgemäß eingesetzten Laseradditive D schnelle Markierungen mit hohen Pulsraten und verfügen über ein großes Prozessfenster bezogen auf die Lasereinstellungen. Über die Einstellung der Laserparameter lässt sich darüber hinaus die Farbe der Markierung bis hin zu sehr dunklen Markierungen gezielt steuern. Allein über die Steuerung der Laserparameter (Leistung, Belichtungsdauer, Fokus) sind detailreiche farbige Halbtonbilder zugänglich.

Die Beschriftung der erfindungsgemäßen Polymerzusammensetzung mit einem Laser erfolgt derart, dass der Probenkörper in den Strahlengang eines gepulsten Lasers, vorzugsweise eines Nd:YAG-Lasers, $YVO_4$-Lasers oder 1064 nm-Faserlasers gebracht wird. Ferner ist eine Beschriftung mit einem Excimer-Laser, z. B. über eine Maskentechnik, möglich. Jedoch sind auch mit anderen herkömmlichen Lasertypen, die eine Wellenlänge in einem Bereich hoher Absorption des verwendeten Laseradditivs D aufweisen, die gewünschten Ergebnisse zu erzielen. Die erhaltene Markierung wird durch die Bestrahlungszeit (bzw. Pulszahl bei Puls-lasern) und Bestrahlungsleistung des Lasers sowie des verwendeten Kunststoff-systems bestimmt. Die Leistung der verwendeten Laser hängt von der jeweiligen Anwendung ab und kann im Einzelfall vom Fachmann ohne weiteres ermittelt werden.

Der verwendete Laser hat im Allgemeinen eine Wellenlänge im Bereich von 157 nm bis 10,6 $\mu$m, vorzugsweise im Bereich von 532 nm bis 10,6 $\mu$m. Beispielsweise seien hier $CO_2$-Laser (10,6 $\mu$m) und Nd:YAG-Laser (1064 bzw. 532 nm) oder gepulste UV-Laser erwähnt. Die Excimerlaser weisen folgende Wellenlängen auf: $F_2$-Excimerlaser (157 nm), ArF-Excimerlaser (193 nm), KrCl-Excimerlaser (222 nm), KrF-Excimerlaser (248 nm), XeCl-Excimerlaser (308 nm), XeF-Excimerlaser (351 nm), frequenzvervielfachte Nd:YAG-Laser mit Wellenlängen von 355 nm (frequenzverdreifacht) oder 265 nm (frequenzvervierfacht). Besonders bevorzugt werden Nd:YAG-Laser (1064 bzw. 532 nm), $YVO_4$-Laser, 1064 nm-Faserlaser oder $CO_2$-Laser eingesetzt. Die Energiedichten der eingesetzten Laser liegen im Allgemeinen im Bereich von 0,3 mJ/$cm^2$ bis 50 J/$cm^2$, vorzugsweise 0,3 mJ/$cm^2$ bis 10 J/$cm^2$. Bei der Verwendung von gepulsten Lasern liegt die Pulsfrequenz im Allgemeinen im Bereich von 1 bis 30 kHz. Entsprechende Laser sind kommerziell erhältlich.

Das Laserschweißen erfolgt häufig in der Weise, dass ein lasertransparentes Material mit einem laserabsorbierenden Material verschweißt wird. Als laserabsorbierendes Material kann das erfindungsgemäß eingesetzte Laseradditiv D in Konzentrationen von 0,001 bis 10 Gew.-%, vorzugsweise 0,001 bis 7 Gew.-% und insbesondere 0,01 bis 3 Gew.-%, bezogen auf die laserabsorbierende Polymer-zusammensetzung zugesetzt werden. Für das Laserschweißen eignen sich vorzugsweise CW Diodenlaser oder Nd:YAG Laser bei Wellenlängen von 800 - 1100 nm, vorzugsweise von 808 - 1080 nm. Die Energiedichten der eingesetzten Laser liegen im Allgemeinen im Bereich von 0,3 mJ/$cm^2$ bis 200 J/$cm^2$, vorzugsweise 0,5 J/$cm^2$ bis 150 J/$cm^2$.

Die vorgenannten Komponenten A, B, C, D und gegebenenfalls E, F und/oder G können in den verschiedensten Kombinationen zur erfindungsgemäßen Additivmischung oder Polymerzusammensetzung verarbeitet werden. So ist es möglich, bereits zu Beginn oder am Ende der Polykondensation oder in einem folgenden Compoundierprozess die Additivmischung in die Polymerschmelze einzumischen. Weiterhin gibt es Verarbeitungsprozesse bei denen einzelne Komponenten erst später zugefügt werden. Dies wird insbesondere beim Einsatz von Pigment- oder Additivmasterbatches praktiziert. Außerdem besteht die Möglichkeit, insbesondere pulverförmige Komponenten auf das durch den Trocknungsprozess eventuell warme Polymergranulat aufzutrommeln.

Auch können zwei oder mehrere der Komponenten der erfindungsgemäßen Polymerzusammensetzungen oder Additivmischungen vor dem Einbringen in die Polymermatrix durch Vermischen kombiniert werden. Dabei können herkömmliche Mischaggregate eingesetzt werden, in denen die Komponenten in einem geeigneten Mischer, z. B. 0,01 bis 10 Stunden bei 0 bis 300 °C gemischt werden.

Aus zwei oder mehreren der Komponenten der erfindungsgemäßen Polymerzusammensetzungen oder Additivmischungen können auch Granulate hergestellt werden, die anschließend in die Polymermatrix eingebracht werden können.

Dazu können zwei oder mehr Komponenten der erfindungsgemäßen Polymerzusammensetzung oder Additivmischungen mit Granulierhilfsmittel und/oder Bindemittel in einem geeigneten Mischer oder einem Granulierteller zu Granulaten verarbeitet werden.

Das zunächst entstehende Rohprodukt kann in einem geeigneten Trockner getrocknet beziehungsweise zum weiteren Kornaufbau getempert werden.

Die erfindungsgemäße Polymerzusammensetzung oder Additivmischung oder zwei oder mehrere Komponenten davon kann in einer Ausführungsform durch Rollkompaktierung hergestellt werden.

Die erfindungsgemäße Polymerzusammensetzung oder Additivmischung oder zwei oder mehrere Komponenten davon kann in einer Ausführungsform dadurch hergestellt werden, dass die Inhaltsstoffe gemischt, stranggepresst, abgeschlagen (bzw. gegebenenfalls gebrochen und klassiert) und getrocknet (und gegebenenfalls gecoatet) werden.

Die erfindungsgemäße Polymerzusammensetzung oder Additivmischung oder zwei oder mehrere Komponenten davon kann in einer Ausführungsform durch Sprühgranulierung hergestellt werden.

Die erfindungsgemäße Polymerzusammensetzung oder Additivmischung liegt bevorzugt in Granulatform, z. B. als Extrudat oder als Compound, vor. Das Granulat hat bevorzugt Zylinderform mit kreisförmiger, elliptischer oder unregelmäßiger Grundfläche, Kugelform, Kissenform, Würfelform, Quaderform, Prismenform.

Typische Längen-zu-Durchmesser-Verhältnis des Granulates betragen 1 zu 50 bis 50 zu 1, bevorzugt 1 zu 5 bis 5 zu 1.

Das Granulat hat bevorzugt einen Durchmesser von 0,5 bis 15 mm, besonders bevorzugt von 2 bis 3 mm und bevorzugt eine Länge von 0,5 bis 15 mm, besonders bevorzugt von 2 bis 5 mm.

Beim Einsatz von Polymeren oder Vorläufern davon, die zu duroplastischen Polymerzusammensetzungen verarbeitet werden, können unterschiedliche Herstellungsverfahren zum Einsatz gelangen.

Ein Verfahren zur Herstellung von flammwidrigen duroplastischen Massen ist dadurch gekennzeichnet, dass man ein duroplastisches Harz mit einer erfindungsgemäßen Additivmischung enthaltend die Komponenten A, B, C und D und gegebenenfalls E und ggf. mit weiteren Flammschutzmitteln, Synergisten, Stabilisatoren, Additiven und Füll- oder Verstärkungsstoffen vermischt und die resultierende Mischung bei erhöhtem Druck, beispielsweise bei Drücken von 3 bis 10 bar und bei moderaten Temperaturen, beispielsweise bei Temperaturen von 20 bis 60 °C, nass presst (Kaltpressung).

Ein anderes Verfahren zur Herstellung von flammwidrigen duroplastischen Massen ist dadurch gekennzeichnet, dass man ein duroplastisches Harz mit einer erfindungsgemäßen Additivmischung enthaltend die Komponenten A, B, C und D und gegebenenfalls E und ggf. mit weiteren Flammschutzmitteln, Synergisten, Stabilisatoren, Additiven und Füll- oder Verstärkungsstoffen vermischt und die resultierende Mischung bei erhöhtem Druck, beispielsweise bei Drücken von 3 bis 10 bar und bei erhöhten Temperaturen, beispielsweise bei Temperaturen von 80 bis 150 °C, nass presst (Warm- oder Heißpressung).

Gegenstand der Erfindung sind auch Formteile hergestellt aus den Polymerzusammensetzungen enthaltend die Komponenten A, B, C, D und F und gegebenenfalls die Komponenten E und/oder G.

Bei den erfindungsgemäßen Formteilen kann es sich um beliebige Ausformungen handeln. Beispiele dafür sind Fasern, Folien oder Formkörper, erhältlich aus den erfindungsgemäßen flammgeschützten Polymerformmassen durch beliebige Formverfahren, insbesondere durch Spritzguss oder Extrusion.

Die Herstellung der erfindungsgemäßen Polymer-Formkörper kann durch beliebige Formverfahren erfolgen. Beispiele dafür sind Spritzgießen, Pressen, Schaumspritzgießen, Gasinnendruck-Spritzgießen, Blasformen, Foliengießen, Kalandern, Laminieren oder Beschichten bei höheren Temperaturen mit der erfindungsgemäßen Formmasse.

Bei den Formteilen handelt es sich vorzugsweise sich um Spritzgussteile oder um Extrusionsteile.

Die Verwendung der erfindungsgemäß dotierten und flammgeschützten Polymerzusammensetzungen kann auf allen Gebieten erfolgen, wo bisher übliche Schweißverfahren oder Druckverfahren zur Beschriftung oder zum Fügen von Kunststoffen eingesetzt werden. Beispielsweise können Formmassen, Halbzeuge und Fertigteile aus der erfindungsgemäßen Polymerzusammensetzung in der Elektro-, Elektronik- und Kraftfahrzeugindustrie Anwendung finden. Die Kennzeichnung und Beschriftung von z. B. Kabeln, Leitungen, Zierleisten bzw. Funktionsteilen im Heizungs-, Lüftungs- und Kühlbereich oder Schalter, Stecker, Hebel und Griffe, die aus der erfindungsgemäß dotiertem und flammgeschützten Polymerzusammensetzung bestehen, können selbst an schwer zugänglichen Stellen mit Hilfe von Laserlicht markiert werden. Weiterhin kann das erfindungsgemäße Polymersystem bei Verpackungen im Lebensmittelbereich oder im Spielzeugbereich eingesetzt werden. Die Markierungen auf den Verpackungen zeichnen sich dadurch aus, dass sie wisch- und kratzfest, stabil bei nachträglichen Sterilisationsprozessen, und hygienisch rein beim Markierungsprozess aufbringbar sind. Komplette Etikettenbilder können dauerhaft auf die Verpackung für ein Mehrwegsystem aufgebracht werden. Weiterhin findet das erfindungsgemäße Polymersystem Anwendung in der Medizintechnik, beispielsweise bei der Markierung von Petrischalen, Microtiterplatten, Einmalspritzen, Ampullen, Probenbehältern, Versorgungsschläuchen und medizinische Auffangbeuteln bzw. Vorratsbeuteln.

Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muss sehr dauerhaft werden, da die Ohrmarken teilweise über mehrere Jahre an den Tieren verbleiben.

Die Erfindung betrifft bevorzugt die Verwendung der erfindungsgemäßen Polymerzusammensetzungen zur Herstellung von Formkörpern in Form von Bauteilen für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

Die Wandstärke der erfindungsgemäßen Formkörper kann typischerweise bis zu 10 mm betragen. Besonders geeignet sind Formkörper mit weniger als 1,5 mm Wandstärke, mehr bevorzugt von weniger als 1 mm Wandstärke und

besonders bevorzugt von weniger als 0,5 mm Wandstärke.

Die nachfolgenden Beispiele erläutern die Erfindung.

1. Eingesetzte Komponenten

Flammschutzmittel FM 1 (Komponente A):
Aluminiumsalz der Diethylphosphinsäure hergestellt in Analogie zu Beispiel 1 der DE 196 07 635 A1

Flammschutzmittel FM 2 (Komponenten A und B):
Aluminiumsalz der Diethylphosphinsäure enthaltend 0,9 mol % an Aluminium-Ethylbutylphospinat hergestellt in Analogie zu Beispiel 1 der DE 10 2014 001 222 A1

Flammschutzmittel FM 3 (Komponenten A, B und C):
Aluminiumsalz der Diethylphosphinsäure enthaltend 0,9 mol % an Aluminium-Ethylbutylphospinat und 0,5 mol % an Aluminium-Ethylphosphonat hergestellt nach Beispiel 3 der US 7,420,007 B2

Flammschutzmittel FM 4 (Komponenten A, B und C):
Aluminiumsalz der Diethylphosphinsäure enthaltend 2,7 mol % an Aluminium-Ethylbutylphospinat und 0,8 mol % an Aluminium-Ethylphosphonat hergestellt nach Beispiel 4 der US 7,420,007 B2

Flammschutzmittel FM 5 (Komponenten A, B und C):
Aluminiumsalz der Diethylphosphinsäure enthaltend 0,5 mol % an Aluminium-Ethylbutylphospinat und 0,05 mol % an Aluminium-Ethylphosphonat hergestellt nach dem Verfahren gemäß US 7,420,007 B2

Flammschutzmittel FM 6 (Komponenten A, B und C):
Aluminiumsalz der Diethylphosphinsäure enthaltend 10 mol % an Aluminium-Ethylbutylphospinat und 5 mol % an Aluminium-Ethylphosphonat hergestellt nach dem Verfahren gemäß US 7,420,007 B2

Flammschutzmittel FM 7 (Komponente E):
Aluminiumsalz der Phosphonsäure hergestellt nach Beispiel 1 der DE 10 2011 120 218 A1

Flammschutzmittel FM 8 (Komponente H):
Melamin-Polyphosphat hergestellt nach dem Beispiel der WO 2000/002869 A1

Laseradditiv L1 (Komponente D):
Mit Kupfersulfid dotiertes Zinksulfid, hergestellt nach Beispiel 1 der DE 10 2014 018 586 A1.

Laseradditiv L2 (Komponente D):
Kupferhydroxidphosphat (Libethenit)

Handelsübliche Polymere (Komponente F):

Polyamid 6.6 (PA 6.6-GV; Schmelzbereich von 255-260 °C): Ultramid® A27 (BASF)
Polybutylenterephthalat (PBT): Ultradur® 4500 (BASF)

Glasfasern (Komponente G):
Glasfasern PPG HP 3610 10μm Durchmesser, 4,5 mm Länge (Fa. PPG, NL),

2. Herstellung, Verarbeitung und Prüfung von flammhemmenden thermoplastischen Formmassen

2.1 Polyamid-Formmassen

Die Additivkomponenten wurden in den in den Tabellen angegebenen Verhältnissen vermischt und über den Seiteneinzug eines Doppelschnecken-Extruders (Typ Leistritz ZSE 27/44D) bei Temperaturen von 260 bis 310 °C in PA 6.6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 320 °C zu Prüfkörpern verarbeitet und anhand des UL 94-Tests (Underwriter Laboratories) auf Flammwidrigkeit geprüft und klassifiziert. Neben der Klassifikation wurde auch die Nachbrennzeit angegeben.

Der Comparative Tracking Index der Formteile wurde gemäß dem International Electrotechnical Commission Standard IEC-60112/3 ermittelt.

Der Glow Wire Flammability Index (GWIT-Index) wurde nach der Norm IEC-60695-2-12 ermittelt.

Die Glühdrahtentzündungstemperatur (Glow Wire Ignition Temperature, GWIT) wurde nach der Norm IEC-60695-2-13 ermittelt.

Bei der GWFI-Prüfung wird an 3 Prüfkörpern (beispielsweise an Platten der Geometrie 60 × 60 × 1,5 mm) mit Hilfe eines glühenden Drahtes bei Temperaturen zwischen 550 und 960 °C die maximale Temperatur ermittelt, bei der eine Nachbrennzeit von 30 Sekunden nicht überschritten wird und die Probe nicht brennend abtropft. Bei der GWIT-Prüfung wird bei einer vergleichbaren Messprozedur die Glühdrahtentzündungstemperatur angegeben, die 25 K (30K zwischen 900 °C und 960 °C) höher ist als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit $\geq$ 5 sec.

Zur Untersuchung der Lasermarkierbarkeit wurden Kunststoffplättchen mit den Abmessungen 60 mm × 90 mm × 1,5 mm (B × H × T) mit einem gepulsten $YVO_4$-Laser mit 1064 nm Wellenlänge und einer maximalen Ausgangsleistung von 10,5 W lasermarkiert. Bei Erstellen des Testrasters wurden Geschwindigkeit zwischen 500 und 5000 mm/s und Frequenz zwischen 20 und 100 kHz variiert. Es werden gefüllte Flächen mit einem Linienabstand von 50 μm und darüber hinaus Linienschrift gelasert. Die Beurteilung der Güte der erzeugten Lasermarkierungen erfolgte visuell. Dabei bedeutet:

1 = sehr definierte und detailgetreue Linienmarkierung
2 = kleinere Abbildungsfehler im Testraster
3 = deutliche Abbildungsfehler im Testraster

Sämtliche Versuche der jeweiligen Serie wurden, falls keine anderen Angaben gemacht wurden, aufgrund der Vergleichbarkeit unter identischen Bedingungen (wie Temperaturprogramme, Schneckengeometrien und Spritzgießparameter) durchgeführt.

2.2 Polyester-Formmassen

Es wurde wie bei den Polyamid-Formmassen verfahren. Nur erfolgte das Einarbeiten der Additivkomponenten in das Polymere im DoppelschneckenExtruder bei Temperaturen von 240 bis 280 °C.

Die Verarbeitung der getrockneten Formmassen zu Prüfkörpern auf der Spritzgießmaschine erfolgte bei Massetemperaturen von 260 bis 280 °C.

Beispiele 1-10 und Vergleichsbeispiele V1-V5 mit PA 6.6

Die Ergebnisse der Versuche mit PA 6.6-Formmassen sind in den in der nachfolgenden Tabelle aufgeführten Beispielen aufgelistet. Alle Mengen sind als Gew.-% angegeben und beziehen sich auf die Polyamid-Formmasse einschließlich der Additive und Verstärkungsstoffe.

Tabelle 1: PA 6.6 GF 30 Versuchsergebnisse (1-10 erfindungsgemäß; V1-V5 Vergleiche)

| Beispiel Nr. | 1a | 1b | 1c | 2 | 3 | 4 | 5 | 6 | 7 | 8 | 8a | 9 | 10 | V1 | V2 | V3 | V4 | V5 |
|---|---|---|---|---|---|---|---|---|---|---|---|---|---|---|---|---|---|---|
| F: Polyamid 6.6 | 52 | 52 | 49 | 52,9 | 50 | 61 | 61 | 61 | 61 | 51,98 | 51 | 61 | 61 | 61 | 61 | 61 | 61 | 57 |
| G: Glasfasern | 30 | 30 | 30 | 30 | 30 | 30 | 30 | 30 | 30 | 30 | 30 | 30 | 30 | 30 | 30 | 30 | 30 | 30 |
| A+B+C: FM 3 | 8 | 12 | 16 | 12 | 12 | - | - | - | - | - | - | - | - | - | - | - | - | - |
| A+B+C: FM 4 | - | - | - | - | - | 8 | - | - | - | 12 | 15 | 6 | 6 | - | - | - | - | - |
| A+B+C: FM 5 | - | - | - | - | - | - | 8 | 8 | - | - | - | - | - | - | - | - | - | - |
| A+B+C: FM 6 | - | - | - | - | - | - | - | - | 8 | - | - | - | - | - | - | - | - | - |
| A+B: FM 2 | - | - | - | - | - | - | - | - | - | - | - | - | - | - | - | 8 | 8 | 12 |
| A: FM 1 | - | - | - | - | - | - | - | - | - | - | - | - | - | 8 | 8 | - | - | - |
| E: FM7 | - | - | - | - | - | - | - | - | - | 0,02 | 3 | 2 | 2 | - | - | - | - | - |
| H: FM 8 | 9 | 5 | 4 | 5 | 5 | - | - | - | - | 5 | - | - | - | - | - | - | - | - |
| D: L1 | 1 | 1 | 1 | - | 3 | - | 1 | - | 1 | - | - | 1 | - | 1 | - | 1 | - | 1 |
| D: L2 | - | - | - | 0,1 | - | 1 | - | 1 | - | 1 | 1 | - | 1 | - | 1 | - | 1 | - |
| UL 94 0,4 mm / Zeit [sek.] | V0/27 | V-0/26 | V-0128 | V-0/28 | V-0122 | V-0/25 | V-0/45 | V-0146 | V-0/30 | V-0/31 | V-0123 | V-0/19 | V-0117 | V-0/51 | V-0/49 | V-0149 | V-0/47 | V-0140 |
| GWFI [°C] | 960 | 960 | 960 | 960 | 960 | 960 | 960 | 960 | 960 | 960 | 960 | 960 | 960 | 960 | 960 | 960 | 960 | 960 |
| GWIT [°C] | 800 | 800 | 600 | 800 | 800 | 800 | 800 | 800 | 800 | 800 | 800 | 825 | 825 | 725 | 725 | 750 | 750 | 775 |
| CTI [Volt] | 800 | 600 | 600 | 600 | 600 | 600 | 600 | 600 | 600 | 600 | 600 | 600 | 600 | 500 | 500 | 500 | 500 | 550 |
| Lasermarkierbarkeit | 1 | 1 | 1 | 1 | 1 | 1 | 1 | 1 | 1 | 1 | 1 | 1 | 1 | 1 | 1 | 1 | 1 | 1 |

Die erfindungsgemäßen Polyamidzusammensetzungen der Beispiele 1 bis 10 erreichen die Brandklasse UL 94 V-0 bei 0,4 mm und gleichzeitig CTI 600 Volt, GWFI 960 °C und GWIT 800 °C bzw. 825 °C. Diese Polyamidzusammensetzungen sind sehr gut lasermarkierbar. Der Zusatz von Komponente E in Beispielen 8 bis 10 führt zu einer nochmaligen Verbesserung des Flammschutzes ausgedrückt durch eine verringerte Nachbrennzeit und zu einer Verbesserung des GWIT-Wertes.

Das Weglassen von Komponenten B und C in Vergleichsbeispielen V1 und V2 hatte neben einer verlängerten Nachbrennzeit im Vergleich zu den Beispielen 1-10 verringerte CTI- und GWIT-Werte zur Folge.

Das Weglassen von Komponente C in Vergleichsbeispielen V3 und V4 hatte neben einer verlängerten Nachbrennzeit im Vergleich zu den Beispielen 1-10 ebenfalls verringerte CTI- und GWIT-Werte zur Folge.

In Vergleichsbeispiel V5 wurde durch Erhöhung der Konzentration an Komponenten A und B im Vergleich zu Vergleichsbeispiel V4 zwar eine Verlängerung der Nachbrennzeit erreicht. Allerdings zeigte diese Polyamidzusammensetzung immer noch eine im Vergleich zu Beispielen 1 bis 10 verringerte GWIT- und CTI-Werte.

Beispiele 11 - 20 und Vergleichsbeispiele V6-V10 mit PBT

Die Ergebnisse der Versuche mit PBT-Formmassen sind in den in der nachfolgenden Tabelle aufgeführten Beispielen aufgelistet. Alle Mengen sind als Gew.-% angegeben und beziehen sich auf die Polyester-Formmasse einschließlich der Additive und Verstärkungsstoffe.

Tabelle 2: PBT GF 30 Versuchsergebnisse 11-20 erfindungsgemäß; V6-V10 Vergleiche)

| Beispiel Nr. | 11 | 12 | 13 | 14 | 15 | 16 | 17 | 18 | 19 | 20 | V6 | V7 | V8 | V9 | V10 |
|---|---|---|---|---|---|---|---|---|---|---|---|---|---|---|---|
| F: PBT | 57 | 57 | 57 | 57 | 57 | 57 | 57 | 57 | 57 | 57 | 57 | 57 | 57 | 57 | 57 |
| G: Glasfasern | 30 | 30 | 30 | 30 | 30 | 30 | 30 | 30 | 30 | 30 | 30 | 30 | 30 | 30 | 30 |
| A+B+C: FM 3 | 12 | 12 | - | - | - | - | - | - | - | - | - | - | - | - | - |
| A+B+C: FM 4 | - | - | 12 | 12 | - | - | - | - | 10 | 10 | - | - | - | - | - |
| A+B+C: FM 5 | - | - | - | - | 12 | 12 | - | - | - | - | - | - | - | - | - |
| A+B+C: FM 6 | - | - | - | - | - | - | 12 | 12 | - | - | - | - | - | - | - |
| A+B: FM 2 | - | - | - | - | - | - | - | - | - | - | - | - | 12 | 12 | 18 |
| A: FM 1 | - | - | - | - | - | - | - | - | - | - | 12 | 12 | - | - | - |
| E: FM 7 | - | - | - | - | - | - | - | - | 2 | 2 | - | - | - | - | - |
| D: L1 | 1 | - | - | 1 | - | 1 | - | 1 | 1 | - | 1 | - | 1 | - | 1 |
| D: L2 | - | 1 | - | - | - | - | - | - | - | 1 | - | 1 | - | 1 | - |
| UL 94 0,4 mrr Zeit [sek.] | V-0/26 | V-0/27 | V-0/20 | V-0/21 | V-0/24 | V-0/26 | V-0/45 | V-0/41 | V-0/12 | V-0/16 | V-0/52 | V-0/50 | V-0/48 | V-0/47 | V-0/43 |
| GWFI [ °C] | 960 | 960 | 960 | 960 | 960 | 960 | 960 | 960 | 960 | 960 | 960 | 960 | 960 | 960 | 960 |
| GWIT [ °C] | 775 | 775 | 775 | 775 | 775 | 775 | 775 | 775 | 800 | 800 | 725 | 725 | 725 | 725 | 750 |
| CTI [Volt] | 600 | 600 | 600 | 600 | 600 | 600 | 600 | 600 | 600 | 600 | 500 | 500 | 500 | 500 | 550 |
| Lasermarkierbarkeit | 1 | 1 | 1 | 1 | 1 | 1 | 1 | 1 | 1 | 1 | 1 | 1 | 1 | 1 | 1 |

Die erfindungsgemäßen Polyesterzusammensetzungen der Beispiele 10 bis 20 erreichen die Brandklasse UL 94 V-0 bei 0,4 mm und gleichzeitig CTI 600 Volt, GWFI 960 °C und GWIT 775 °C bzw. 800 °C °C. Diese Polyesterzusammensetzungen sind sehr gut lasermarkierbar. Der Zusatz von Komponente E in Beispielen 19 und 20 führt zu einer nochmaligen Verbesserung des Flammschutzes ausgedrückt durch eine verringerte Nachbrennzeit und zu einer Verbesserung des GWIT-Wertes.

Das Weglassen von Komponenten B und C in Vergleichsbeispielen V6 und V7 hatte neben einer verlängerten Nachbrennzeit im Vergleich zu den Beispielen 10 - 20 verringerte CTI- und GWIT-Werte zur Folge.

Das Weglassen von Komponente C in Vergleichsbeispielen V8 und V9 hatte neben einer verlängerten Nachbrennzeit im Vergleich zu den Beispielen 10 - 20 ebenfalls verringerte CTI- und GWIT-Werte zur Folge.

In Vergleichsbeispiel V10 wurde durch Erhöhung der Konzentration an Komponenten A und B im Vergleich zu Vergleichsbeispiel V9 zwar eine Verlängerung der Nachbrennzeit erreicht. Allerdings zeigte diese Polyesterzusammensetzung immer noch eine im Vergleich zu Beispielen 10 bis 20 verringerte GWIT- und CTI-Werte.

## Patentansprüche

**1.** Additivmischungen für Kunststoffe enthaltend

- Phosphinsäuresalz der Formel (I) als Komponente A

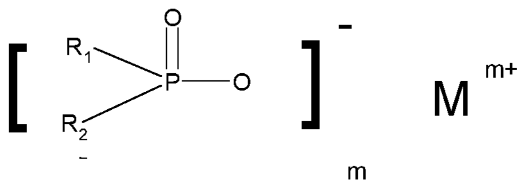

(I),

worin $R_1$ und $R_2$ Ethyl bedeuten,
M Al, Fe, $TiO_p$ oder Zn ist,
m 2 bis 3, vorzugsweise 2 oder 3, bedeutet, und

$$p = (4 - m) / 2$$

ist

- Verbindung ausgewählt aus der Gruppe der Al-, Fe-, $TiO_p$- oder Zn-Salze der Ethylbutylphosphinsäure, der Dibutylphosphinsäure, der Ethylhexylphosphinsäure, der Butylhexylphosphinsäure und/oder der Dihexylphosphinsäure als Komponente B
- Phosphonsäuresalz der Formel II als Komponente C

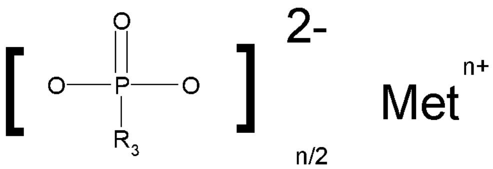

(II),

worin $R_3$ Ethyl bedeutet,
Met Al, Fe, $TiO_q$ oder Zn ist,
n 2 bis 3, vorzugsweise 2 oder 3, bedeutet, und

$$q = (4 - n) / 2$$

ist, und

- Kupfer als Komponente D, wobei es sich bei der Komponente D um ein Kupfersalz handelt.

2. Additivmischungen nach Anspruch 1, **dadurch gekennzeichnet, dass** M und Met Al bedeuten, m und n 3 sind und dass Komponente B ein Aluminiumsalz ist.

3. Additivmischungen nach mindestens einem der Ansprüche 1 bis 2, **dadurch gekennzeichnet, dass**

- der Anteil von Komponente A 5 bis 85 Gew.-%,
- der Anteil von Komponente B 0,01 bis 10 Gew.-%,
- der Anteil von Komponente C 0,01 bis 10 Gew.-%, und
- der Anteil von Komponente D 0,0001 bis 10 Gew.-%, beträgt,

wobei die Prozentangaben sich auf die Gesamtmenge der Additivmischungen beziehen.

4. Additivmischungen nach Anspruch 3, **dadurch gekennzeichnet, dass**

- der Anteil von Komponente A 10 bis 60 Gew.-%,
- der Anteil von Komponente B 0,1 bis 2,5 Gew.-%,
- der Anteil von Komponente C 0,1 bis 2,5 Gew.-%, und
- der Anteil von Komponente D 0,1 bis 3 Gew.-%, beträgt,

wobei die Prozentangaben sich auf die Gesamtmenge der Additivmischungen beziehen.

5. Additivmischungen nach mindestens einem der Ansprüche 1 bis 4, **dadurch gekennzeichnet, dass** sie als Komponente D 0,06 bis 1,65 Gew.-%, bevorzugt 0,11 bis 1,1 Gew.-% an Kupfer, wobei es sich bei der Komponente D um ein Kupfersalz handelt.

6. Additivmischungen nach mindestens einem der Ansprüche 1 bis 5, **dadurch gekennzeichnet, dass** Komponente D ausgewählt wird aus der Gruppe bestehend aus Kupfersulfat, Kupferphosphat, Kupferhydroxidphosphat, Kupferthiocyanat, Kupfersalze von ein- oder zweiwertigen Carbonsäuren, insbesondere Kupferfumarat oder Kupfermaleat, oder mit Kupfer dotiertem Zinksulfid.

7. Additivmischungen nach mindestens einem der Ansprüche 1 bis 6, **dadurch gekennzeichnet, dass** das Kupfersalz ausgewählt wird aus der Gruppe der Verbindungen bestehend aus $Cu_3(PO_4)_2 \cdot 2Cu(OH)_2$, $Cu_3(PO_4)_2 \cdot Cu(OH)_2$, $Cu_2P_2)O_7 \cdot H_2O$, $4CuO \cdot P_2O_5 \cdot H_2O$, $5CuO \cdot P_2O_5 \cdot 3H_2O$, $6CuO \cdot P_2O_5 \cdot 3H_2O$, $4CuO \cdot P_2O_5 \cdot 3H_2O$, $4CuO \cdot P_2O_5 \cdot 1{,}2H_2O$, $4CuO \cdot P_2O_5 \cdot 1{,}5H_2O$ oder aus Gemischen von zwei oder mehreren davon.

8. Additivmischungen nach mindestens einem der Ansprüche 1 bis 7, **dadurch gekennzeichnet, dass** die Komponente D eine Mischung von Zinn(II)phosphat und Kupfer(II)-hydroxidphosphat im Gewichtsverhältnis von 95:5 bis 50:5 ist oder eine Mischung von Kupfer(II)hydroxidphosphat und Eisenphosphit im Gewichtsverhältnis von 70:30 bis 30:70 ist.

9. Additivmischungen nach mindestens einem der Ansprüche 1 bis 8, **dadurch gekennzeichnet, dass** diese als Komponente E ein anorganisches Phosphonat enthalten.

10. Additivmischungen nach Anspruch 9, **dadurch gekennzeichnet, dass** das anorganische Phosphonat eine Verbindung der Formel III ist

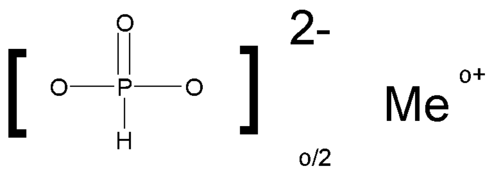

(III),

worin Me Fe, $TiO_r$, Zn oder insbesondere Al ist,
o 2 bis 3, vorzugsweise 2 oder 3, bedeutet, und

$$r = (4 - o) / 2$$

ist,

wobei die Verbindung der Formel (III) in einer Menge von 0,01 bis 50 Gew.-%, insbesondere in einer Menge von 0,02 bis 25 Gew.-%, bezogen auf die Gesamtmenge der Additivmischung, vorliegt.

**11.** Additivmischungen nach mindestens einem der Ansprüche 1 bis 10, **dadurch gekennzeichnet, dass** Komponenten A, B und C und gegebenenfalls E in Teilchenform vorliegen, wobei die mittlere Teilchengröße ($d_{50}$) 1 bis 100 $\mu$m beträgt.

**12.** Additivmischungen nach mindestens einem der Ansprüche 1 bis 11, **dadurch gekennzeichnet, dass** diese als Komponente H ein Melaminpolyphosphat mit einem mittleren Kondensationsgrad von 2 bis 200 enthalten.

**13.** Polymerzusammensetzungen enthaltend thermoplastische und/oder duroplastische Polymere und eine Additivmischung nach mindestens einem der Ansprüche 1 bis 12.

**14.** Polymerzusammensetzungen nach Anspruch 13, **dadurch gekennzeichnet, dass** diese als Komponente F thermoplastische Polymere enthalten, insbesondere Polyamide oder Polyester.

**15.** Polymerzusammensetzungen nach mindestens einem der Ansprüche 13 bis 14, **dadurch gekennzeichnet, dass** der Anteil an Komponente F 25 bis 95 Gew.-%, an Komponente A 1 bis 35 Gew.-%, an Komponente B 0,01 bis 3 Gew.-%, an Komponente C 0,001 bis 1 Gew.-%, an Komponente D 0,005 bis 2 Gew.-%, und an Komponente E 0 bis 10 Gew.-% beträgt, wobei sich die Prozentangaben auf die Gesamtmenge der Polymerzusammensetzung beziehen.

**16.** Polymerzusammensetzungen nach mindestens einem der Ansprüche 13 bis 15, **dadurch gekennzeichnet, dass** diese einen Comparative Tracking Index, gemessen nach dem International Electrotechnical Commission Standard IEC-60112/3, von größer gleich 500 Volt aufweisen.

**17.** Polymerzusammensetzungen nach mindestens einem der Ansprüche 13 bis 16, **dadurch gekennzeichnet, dass** diese eine Bewertung von V0 nach UL-94, insbesondere gemessen an Formteilen von 3,2 mm bis 0,4 mm Dicke, erreichen.

**18.** Polymerzusammensetzungen nach mindestens einem der Ansprüche 13 bis 17, **dadurch gekennzeichnet, dass** diese einen Glow Wire Flammability Index nach IEC-60695-2-12 von größer gleich 960 °C aufweisen, insbesondere gemessen an Formteilen von 0,75 - 3 mm Dicke.

**19.** Polymerzusammensetzungen nach mindestens einem der Ansprüche 13 bis 18, **dadurch gekennzeichnet, dass** diese eine Glühdrahtentzündungstemperatur (Glow Wire Ignition Temperature, GWIT) nach IEC-60695-2-13 von mindestens 775 °C aufweisen.

**20.** Polymerzusammensetzungen nach mindestens einem der Ansprüche 13 bis 19, **dadurch gekennzeichnet, dass** diese weitere Additive als Komponente G enthalten, wobei die weiteren Additive ausgewählt sind aus der Gruppe bestehend aus Antioxidantien, UV-Stabilisatoren, Gammastrahlenstabilisatoren, Hydrolysestabilisatoren, Co-Stabilisatoren für Antioxidantien, Antistatika, Emulgatoren, Nukleierungsmittel, Weichmacher, Verarbeitungshilfsmittel, Schlagzähmodifikatoren, Farbstoffe oder Pigmente, die sich von Komponente D unterscheiden, Füllstoffe, Verstärkungsstoffe und/oder weitere Flammschutzmittel, die sich von Komponenten A, B, C, E und H unterscheiden.

**21.** Polymerzusammensetzungen nach mindestens einem der Ansprüche 13 bis 20, **dadurch gekennzeichnet, dass** diese Glasfasern enthalten.

**22.** Polymerzusammensetzungen nach mindestens einem der Ansprüche 13 bis 21, **dadurch gekennzeichnet, dass** diese ein streuendes Additiv enthalten, insbesondere ein Weißpigment oder einen Füllstoff allein oder in Kombination, wobei die Menge von streuendem Addditiv sich im Bereich von 0,1 bis 1 Gew.-%, bezogen auf die Gesamtmenge der Polymerzusammensetzung, bewegt.

**23.** Verwendung der Polymerzusammensetzungen nach mindestens einem der Ansprüche 13 bis 22 als Formmassen, Halbzeuge oder Fertigteile in der Elektro-, Elektronik- und Kraftfahrzeugindustrie, bei Verpackungen im Lebensmittelbereich oder im Spielzeugbereich, als Etikettenbilder, in der Medizintechnik oder als Kunststoffmarken zur individuellen Kennzeichnung von Tieren.

**24.** Verwendung der Polymerzusammensetzungen nach Anspruch 23, **dadurch gekennzeichnet, dass** diese zur Herstellung von Teilen von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteten Bauteile mit anspruchsvoller Geometrie eingesetzt werden.

## Claims

**1.** Additive mixtures for plastics, comprising

- phosphinic salt of the formula (I) as component A

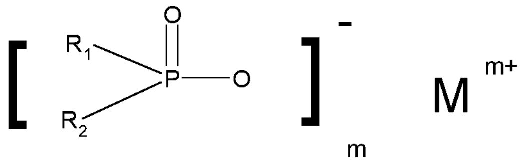

(I),

in which $R_1$ and $R_2$ are ethyl,
M is Al, Fe, $TiO_p$ or Zn,
m is 2 to 3, preferably 2 or 3, and

$$p = (4 - m) / 2$$

- compound selected from the group of the Al, Fe, $TiO_p$ and Zn salts of ethylbutylphosphinic acid, of dibutylphosphinic acid, of ethylhexylphosphinic acid, of butylhexylphosphinic acid and/or of dihexylphosphinic acid as component B
- phosphonic salt of the formula II as component C

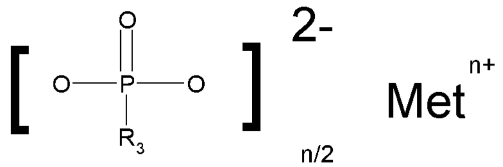

(II),

in which $R_3$ is ethyl,
Met is Al, Fe, $TiO_q$ or Zn,
n is 2 to 3, preferably 2 or 3, and

$$q = (4 - n) / 2,$$

and

- copper as component D, where component D is a copper salt.

**2.** Additive mixtures according to Claim 1, **characterized in that** M and Met are Al, m and n are 3, and component B is an aluminium salt.

**3.** Additive mixtures according to at least one of Claims 1 and 2, **characterized in that**

- the proportion of component A is 5% to 85% by weight,

- the proportion of component B is 0.01% to 10% by weight,
- the proportion of component C is 0.01% to 10% by weight, and
- the proportion of component D is 0.0001% to 10% by weight,

where the percentages are based on the total amount of the additive mixtures.

**4.** Additive mixtures according to Claim 3, **characterized in that**

- the proportion of component A is 10% to 60% by weight,
- the proportion of component B is 0.1% to 2.5% by weight,
- the proportion of component C is 0.1% to 2.5% by weight, and
- the proportion of component D is 0.1% to 3% by weight,

where the percentages are based on the total amount of the additive mixtures.

**5.** Additive mixtures according to at least one of Claims 1 to 4, **characterized in that** they comprise, as component D, 0.06% to 1.65% by weight, preferably 0.11% to 1.1% by weight, of copper, where component D is a copper salt.

**6.** Additive mixtures according to at least one of Claims 1 to 5, **characterized in that** component D is selected from the group consisting of copper sulfate, copper phosphate, copper hydroxide phosphate, copper thiocyanate, copper salts of mono- or dibasic carboxylic acids, especially copper fumarate or copper maleate, or copper-doped zinc sulfide.

**7.** Additive mixtures according to at least one of Claims 1 to 6, **characterized in that** the copper salt is selected from the group of compounds consisting of $Cu_3(PO_4)_2 \cdot 2Cu(OH)_2$, $Cu_3(PO_4)_2 \cdot Cu(OH)_2$, $Cu_2P_2)O_7 \cdot H_2O$, $4CuO \cdot P_2O_5 \cdot H_2O$, $5CuO \cdot P_2O_5 \cdot 3H_2O$, $6CuO \cdot P_2O_5 \cdot 3H_2O$, $4CuO \cdot P_2O_5 \cdot 3H_2O$, $4CuO \cdot P_2O_5 \cdot 1.2H_2O$, $4CuO \cdot P_2O_5 \cdot 1.5H_2O$ or from mixtures of two or more thereof.

**8.** Additive mixtures according to at least one of Claims 1 to 7, **characterized in that** component D is a mixture of tin(II) phosphate and copper(II) hydroxide phosphate in a weight ratio of 95:5 to 50:5 or is a mixture of copper(II) hydroxide phosphate and iron phosphite in a weight ratio of 70:30 to 30:70.

**9.** Additive mixtures according to at least one of Claims 1 to 8, **characterized in that** they comprise an inorganic phosphonate as component E.

**10.** Additive mixtures according to Claim 9, **characterized in that** the inorganic phosphonate is a compound of the formula III

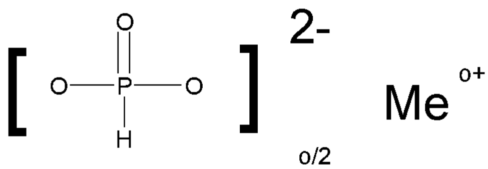 (III),

in which Me is Fe, $TiO_r$, Zn or especially Al,
o is 2 to 3, preferably 2 or 3, and

$$r = (4 - o) / 2,$$

where the compound of the formula (III) is present in an amount of 0.01% to 50% by weight, especially in an amount of 0.02% to 25% by weight, based on the total amount of the additive mixture.

**11.** Additive mixtures according to at least one of Claims 1 to 10, **characterized in that** components A, B and C and optionally E are in particulate form, where the median particle size ($d_{50}$) is 1 to 100 pm.

**12.** Additive mixtures according to at least one of Claims 1 to 11, **characterized in that** they comprise, as component

H, a melamine polyphosphate having an average degree of condensation of 2 to 200.

**13.** Polymer compositions comprising thermoplastic and/or thermoset polymers and an additive mixture according to at least one of Claims 1 to 12.

**14.** Polymer compositions according to Claim 13, **characterized in that** they comprise thermoplastic polymers as component F, especially polyamides or polyesters.

**15.** Polymer compositions according to at least one of Claims 13 and 14, **characterized in that** the proportion of component F is 25% to 95% by weight, that of component A is 1% to 35% by weight, that of component B is 0.01% to 3% by weight, that of component C is 0.001% to 1% by weight, that of component D is 0.005% to 2% by weight and that of component E is 0% to 10% by weight, where the percentages are based on the total amount of the polymer composition.

**16.** Polymer compositions according to at least one of Claims 13 to 15, **characterized in that** they have a comparative tracking index measured by International Electrotechnical Commission Standard IEC-60112/3 of not less than 500 volts.

**17.** Polymer compositions according to at least one of Claims 13 to 16, **characterized in that** they attain a V0 assessment according to UL-94, especially measured on mouldings of thickness 3.2 mm to 0.4 mm.

**18.** Polymer compositions according to at least one of Claims 13 to 17, **characterized in that** they have a glow wire flammability index according to IEC-60695-2-12 of not less than 960°C, especially measured on mouldings of thickness 0.75-3 mm.

**19.** Polymer compositions according to at least one of Claims 13 to 18, **characterized in that** they have a glow wire ignition temperature (GWIT) according to IEC-60695-2-13 of at least 775°C.

**20.** Polymer compositions according to at least one of Claims 13 to 19, **characterized in that** they comprise further additives as component G, where the further additives are selected from the group consisting of antioxidants, UV stabilizers, gamma ray stabilizers, hydrolysis stabilizers, costabilizers for antioxidants, antistats, emulsifiers, nucleating agents, plasticizers, processing auxiliaries, impact modifiers, dyes or pigments other than component D, fillers, reinforcers and/or further flame retardants other than components A, B, C, E and H.

**21.** Polymer compositions according to at least one of Claims 13 to 20, **characterized in that** they comprise glass fibres.

**22.** Polymer compositions according to at least one of Claims 13 to 21, **characterized in that** they comprise a scattering additive, especially a white pigment or a filler alone or in combination, where the amount of scattering additive is in the range from 0.1% to 1% by weight, based on the total amount of the polymer composition.

**23.** Use of the polymer compositions according to at least one of Claims 13 to 22 as moulding compounds, semifinished products or finished products in the electrics, electronics and motor vehicle industry, in packaging in the foods sector or in the games and toys sector, as label motifs, in medical technology or as plastic marks for individual identification of animals.

**24.** Use of the polymer compositions according to Claim 23, **characterized in that** they are used for production of parts of circuit boards, housings, films, conduits, switches, distributors, relays, resistors, capacitors, coils, lamps, diodes, LEDs, transistors, connectors, regulators, storage elements and sensors, in the form of components of large surface area, especially of housing parts for electrical enclosures and in the form of components of complicated configuration with demanding geometry.

**Revendications**

**1.** Mélanges d’additifs pour matériaux synthétiques, contenant

- un sel de l’acide phosphinique de formule (I) en tant que composant A

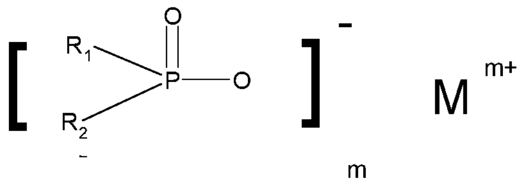 (I),

dans laquelle $R_1$ et $R_2$ signifient éthyle,
M représente Al, Fe, $TiO_p$ ou Zn,
m signifie 2 à 3, de préférence 2 ou 3, et

$$p = (4 - m)/2$$

- un composé choisi dans le groupe des sels d'Al, de Fe, de $TiO_p$ ou de Zn de l'acide éthylbutylphosphinique, de l'acide dibutylphosphinique, de l'acide éthylhexylphosphinique, de l'acide butylhexylphosphinique et/ou de l'acide dihexylphosphinique en tant que composant B
- un sel de l'acide phosphonique de formule II en tant que composant C

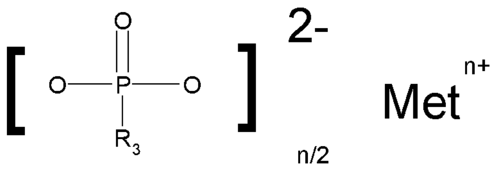 (II),

dans laquelle $R_3$ signifie éthyle,
Met représente Al, Fe, $TiO_q$ ou Zn,
n signifie 2 à 3, de préférence 2 ou 3, et

$$q = (4 - n)/2$$

et

- du cuivre en tant que composant D, le composant D étant un sel de cuivre.

2. Mélanges d'additifs selon la revendication 1, **caractérisés en ce que** M et Met signifient Al, m et n représentent 3 et **en ce que** le composant B est un sel d'aluminium.

3. Mélanges d'additifs selon au moins l'une des revendications 1 à 2, **caractérisés en ce que**

- la proportion de composant A représente 5 à 85% en poids,
- la proportion de composant B représente 0,01 à 10% en poids,
- la proportion de composant C représente 0,01 à 10% en poids et
- la proportion de composant D représente 0,0001 à 10% en poids,

les indications de pourcentage se rapportant à la quantité totale des mélanges d'additifs.

4. Mélanges d'additifs selon la revendication 3, **caractérisés en ce que**

- la proportion de composant A représente 10 à 60% en poids,
- la proportion de composant B représente 0,1 à 2,5% en poids,
- la proportion de composant C représente 0,1 à 2,5% en poids et
- la proportion de composant D représente 0,1 à 3% en poids,

les indications de pourcentage se rapportant à la quantité totale des mélanges d'additifs.

**5.** Mélanges d'additifs selon au moins l'une des revendications 1 à 4, **caractérisés en ce qu'**ils contiennent en tant que composant D 0,06 à 1,65% en poids, de préférence 0,11 à 1,1% en poids, de cuivre, le composant D étant un sel de cuivre.

**6.** Mélanges d'additifs selon au moins l'une des revendications 1 à 5, **caractérisés en ce que** le composant D est choisi dans le groupe constitué par le sulfate de cuivre, le phosphate de cuivre, l'hydroxyphosphate de cuivre, le thiocyanate de cuivre, les sels de cuivre d'acides carboxyliques monovalents ou bivalents, en particulier le fumarate de cuivre ou le maléate de cuivre, ou le sulfure de zinc dopé au cuivre.

**7.** Mélanges d'additifs selon au moins l'une des revendications 1 à 6, **caractérisés en ce que** le sel de cuivre est choisi dans le groupe des composés constitué par $Cu3(PO_4)_2.2Cu(OH)_2$, $Cu_3(PO_4)_2.Cu(OH)_2$, $Cu_2P_2O_7.H_2O$, $4CuO.P_2O_5.H_2O$, $5CuO.P_2O_5.3H_2O$, $6CuO.P_2O_5.3H_2O$, $4CuO.P_2O_5.3H_2O$, $4CuO.P_2O_5.1{,}2H_2O$, $4CuO.P_2O_5.1{,}5H_2O$ ou les mélanges de deux ou plus de ceux-ci.

**8.** Mélanges d'additifs selon au moins l'une des revendications 1 à 7, **caractérisés en ce que** le composant D est un mélange de phosphate d'étain (II) et d'hydroxyphosphate de cuivre (II) dans un rapport pondéral de 95:5 à 50:5 ou un mélange d'hydroxyphosphate de cuivre (II) et de phosphite de fer dans un rapport pondéral de 70:30 à 30:70.

**9.** Mélanges d'additifs selon au moins l'une des revendications 1 à 8, **caractérisés en ce qu'**ils contiennent, en tant que composant E, un phosphonate inorganique.

**10.** Mélanges d'additifs selon la revendication 9, **caractérisés en ce que** le phosphonate inorganique est un composé de formule III

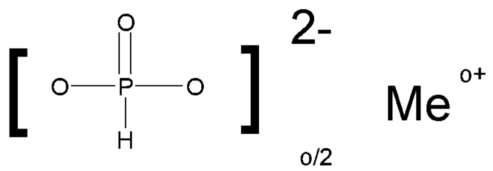

(III),

dans laquelle Me représente Fe, $TiO_r$, Zn ou en particulier Al,
o signifie 2 à 3, de préférence 2 ou 3, et

$$r = (4 - o)/2,$$

le composé de formule (III) étant présent en une quantité de 0,01 à 50% en poids, en particulier en une quantité de 0,02 à 25% en poids, par rapport à la quantité totale du mélange d'additifs.

**11.** Mélanges d'additifs selon au moins l'une des revendications 1 à 10, **caractérisés en ce que** les composants A, B et C et le cas échéant E se trouvent sous forme de particules, la grosseur moyenne de particule ($d_{50}$) étant de 1 à 100 pm.

**12.** Mélanges d'additifs selon au moins l'une des revendications 1 à 11, **caractérisés en ce qu'**ils contiennent, en tant que composant H, un polyphosphate de mélamine présentant un degré de condensation moyen de 2 à 200.

**13.** Compositions polymères, contenant des polymères thermoplastiques et/ou thermodurcissables et un mélange d'additifs selon au moins l'une des revendications 1 à 12.

**14.** Compositions polymères selon la revendication 13, **caractérisées en ce qu'**elles contiennent en tant que composant F des polymères thermoplastiques, en particulier des polyamides ou des polyesters.

**15.** Compositions polymères selon au moins l'une des revendications 13 ou 14, **caractérisées en ce que** la proportion de composant F est de 25 à 95% en poids, celle de composant A est de 1 à 35% en poids, celle de composant B est de 0,01 à 3% en poids, celle de composant C est de 0,001 à 1% en poids, celle de composant D est de 0,005 à 2% en poids et celle de composant E est de 0 à 10% en poids, les indications de pourcentage se rapportant à la quantité totale de la composition polymère.

16. Compositions polymères selon au moins l'une des revendications 13 à 15, **caractérisées en ce qu'**elles présentent un indice de suivi comparatif (Comparative Tracking Index - CTI), mesuré selon la norme de la commission électrotechnique internationale (International Electrotechnical Commission Standard) IEC-60112/2, supérieur ou égal à 500 Volts.

17. Compositions polymères selon au moins l'une des revendications 13 à 16, **caractérisées en ce qu'**elles obtiennent une évaluation de V0 selon la norme UL-94, en particulier mesurée sur des pièces moulées d'une épaisseur de 3,2 mm à 0,4 mm.

18. Compositions polymères selon au moins l'une des revendications 13 à 17, **caractérisées en ce qu'**elles présentent un indice d'inflammabilité au fil incandescent (Glow Wire Flammability Index) selon la norme IEC-60695-2-12 supérieur ou égal à 960°C, en particulier mesuré sur des pièces moulées d'une épaisseur de 0,75-3 mm.

19. Compositions polymères selon au moins l'une des revendications 13 à 18, **caractérisées en ce qu'**elles présentent une température d'ignition au fil incandescent (Glow Wire Ignition Température, GWIT) selon la norme IEC-60695-2-13 d'au moins 775°C.

20. Compositions polymères selon au moins l'une des revendications 13 ou 19, **caractérisées en ce qu'**elles contiennent d'autres additifs en tant que composant G, les autres additifs étant choisis dans le groupe constitué par les antioxydants, les stabilisants aux UV, les stabilisants aux rayons gamma, les stabilisants à l'hydrolyse, les costabilisants pour les antioxydants, les antistatiques, les émulsifiants, les agents de nucléation, les plastifiants, les adjuvants de mise en œuvre, les modificateurs de résilience, les colorants ou les pigments qui sont différents du composant D, les charges, les agents de renforcement et/ou d'autres agents ignifuges qui sont différents des composants A, B, C, E et H.

21. Compositions polymères selon au moins l'une des revendications 13 à 20, **caractérisées en ce qu'**elles contiennent des fibres de verre.

22. Compositions polymères selon au moins l'une des revendications 13 à 21, **caractérisées en ce qu'**elles contiennent un additif dispersif, en particulier un pigment blanc ou une charge, seuls ou en combinaison, la quantité d'additifs dispersifs se situant dans la plage de 0,1 à 1% en poids, par rapport à la quantité totale de la composition polymère.

23. Utilisation des compositions polymères selon au moins l'une des revendications 13 à 22 en tant masses de moulage, de produits semi-finis ou de pièces finies dans l'industrie électrique, électronique et des véhicules automobiles, dans les emballages dans le domaine alimentaire ou dans le domaine des jouets, en tant qu'agent de formation d'étiquettes, dans la technique médicale ou comme marquages en matériau synthétique pour l'identification individuelle d'animaux.

24. Utilisation des compositions polymères selon la revendication 23, **caractérisée en ce qu'**elles sont utilisées pour la fabrication de pièces de circuits imprimés, de boîtiers, de feuilles, de conducteurs, de commutateurs, de répartiteurs, de relais, de résistances, de condensateurs, de bobines, de lampes, de diodes, de DEL, de transistors, de connecteurs, de régulateurs, d'accumulateurs et de capteurs, sous forme de pièces de grande surface, en particulier de pièces de boîtier pour des armoires électriques et sous forme de pièces de conception compliquées, présentant une géométrie sophistiquée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2252258 A
- DE 2447727 A
- WO 200228953 A1
- DE 19734437 A1
- DE 19737727 A1
- US 7420007 B2
- DE 102014018586 A1
- DE 102004051246 A1
- EP 697433 B1
- EP 1276620 B1
- US 5489639 A
- EP 400305 A1
- WO 2016065971 A1
- DE 3929056 A1
- WO 2012045414 A1
- DE 102005016195 A1
- WO 2006027340 A1
- EP 1789475 B1
- WO 2000002869 A1
- EP 1095030 B1
- DE 1900270 A
- JP 2004204194 A
- DE 102007036465 A
- EP 3133112 A
- DE 19607635 A1
- DE 102014001222 A1
- DE 102011120218 A1